# EUROPEAN PATENT SPECIFICATION

(11) **EP 4 519 340 B1**
(45) Date of publication and mention of the grant of the patent: **01.04.2026**
(21) Application number: 23723890.2
(22) Date of filing: 28.04.2023
(51) Int. Cl.: C08G 61/12

(54) **PROCESS FOR PREPARING A POLYCARBONATE BY METAL CATALYZED CROSS COUPLING**
VERFAHREN ZUR HERSTELLUNG EINES POLYCARBONATS DURCH METALLKATALYSIERTE KREUZKOPPLUNG
PROCÉDÉ DE PRÉPARATION D'UN POLYCARBONATE PAR COUPLAGE CROISÉ CATALYSÉ PAR UN MÉTAL

(30) Priority: 04.05.2022 EP 22171503
(43) Date of publication of application: 12.03.2025
(73) Proprietor: Covestro Deutschland AG, 51373 Leverkusen (DE); Universiteit Antwerpen, 2000 Antwerpen (BE)
(72) Inventor: GARSKA, Bernd, 51103 Köln (DE); HEIJL, Jan, 9940 Evergem (BE); MAMPUYS, Pieter, 2240 Zandhoven (BE); MAES, Bert, 2610 Wilrijk (BE)
(74) Representative: Levpat
(86) International application number: PCT/EP2023/061412
(87) International publication number: WO 2023/213745

(56) References cited:
- WO-A1-2010/086385
- KR-A- 20140 035 882

## Description

The present invention relates to a process for preparing a polycarbonate using metal-catalyzed cross-coupling, comprising a reaction of an iodinated diaryl carbonate with a structure of formula (I) and a terminal alkyne with a structure of formula (IIa) or a terminal alkene with a structure of formula (IIb) as described below. Furthermore, the invention relates to a polycarbonate comprising a repeating unit with a structure of formula (IIIa) or (IIIb) as described below.

Polycarbonates, in particular aromatic polycarbonates, are known to exhibit improved mechanical and optical properties, heat resistance and weatherability. Due to such a property profile, polycarbonates are employed in various indoor and outdoor applications. Typically, polycarbonates are prepared by the generally known interphase phosgenation process or *via* melt transesterification. Both processes employ bisphenols, e.g. bisphenol A [2,2-bis(4-hydroxyphenol)propane], reacting either with phosgene or a diaryl carbonate to result in a polymeric structure. This means that typically the polymeric backbone is defined by the structure of the diol and the carbonate group, being introduced into said backbone by the polymerization reaction itself. Employing aromatic diols such as bisphenol A, bisphenol B, bisphenol C, bisphenol E, bisphenol F, bisphenol G, bisphenol M, bisphenol P, bisphenol TMC and bisphenol Z, backbones may be formed that comprise the carbonate group at the aromatic ring. Said carbonate group is located in *para-*position to the at least one other substituent at the aromatic ring which, depending on the structure of the diol, connects the carbonate-aromatic ring-group to the next carbonate group in the polycarbonate backbone.

However, there is a constant need for improving the properties of classical aromatic (co)polycarbonates including the use of bio-based aromatic building blocks. Thus, developing alternative synthesis routes besides the classical interphase phosgenation or melt transesterification processes, enabling to connect aromatic moieties with carbonate groups, raises scientific and economic interests.

Therefore, it is an object of the present invention to provide an alternative process for preparing a polycarbonate. Preferably, it is an object of the present invention to provide a process for preparing a polycarbonate with a repeating unit comprising two aromatic moieties being linked with each other and - within the repeating unit - one of the aromatic moieties being substituted with a carbonate group. More preferably, it is an object of the present invention to provide a process for preparing a polycarbonate with a repeating unit comprising two aromatic moieties being linked with each other and - within the repeating unit - one of the aromatic moieties being substituted with a carbonate group, wherein the carbonate group is introduced to the repeating unit without the need of separately forming the carbonate group. Still preferably, it is an object of the present invention to provide a process for preparing a polycarbonate, including a reaction for the formation of the repeating unit, comprising linking of two aromatic moieties with each other. Such a reaction mandatorily requires that the aromatic moieties comprise carbonate substituents in order to obtain a polycarbonate comprising carbonate groups. Therefore, it is also preferably an object of the present invention to provide a process for preparing a polycarbonate with a repeating unit that comprises two aromatic moieties being linked with each other, and - within the repeating unit - one of the aromatic moieties being substituted with a carbonate group, wherein said carbonate group is not affected by the process as such. In this context the term "affected" preferably means that the carbonate is not degraded.

Besides the above, it is an object of the present invention to provide a polycarbonate, that may be prepared by the process according to the invention. Also, it is an object of the invention to provide a polycarbonate comprising novel chemical and physical properties when compared to polycarbonates known from the state of the art.

Metal-catalyzed cross-coupling reactions for the formation of carbon-carbon bonds are well-known in synthetic chemistry. For example, first reactions of Ullmann and Goldberg in the early 1900s involved copper-promoted carbon-carbon bond formations, and copper remained the catalyst of choice until Nobel Prize awarded works on palladium-catalyzed cross-couplings appeared, for example by Heck, Suzuki, and Negishi. In general, cross-coupling reactions are characterized by the metal-catalyzed coupling of an organic electrophile, typically an organic halide such as an aryl halide, with an (organic) nucleophile, e.g., a terminal alkyne or a terminal alkene in the presence of a base. The following scheme shows an overview on important metal-catalyzed cross-coupling name reactions for the formation of carbon-carbon bonds.

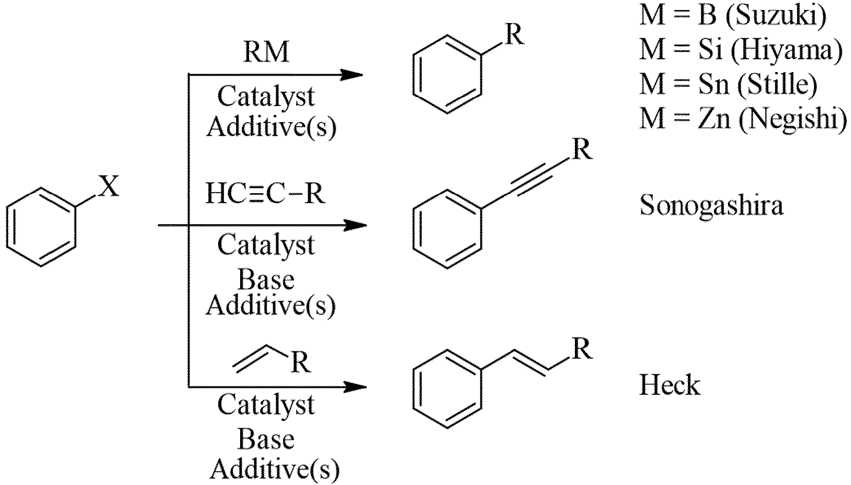

The organic halide can be based on *sp-, sp*²-*,* or *sp*³-hybridized carbon atoms with any halogen or pseudohalogen leaving group, for example, an aryl halide bearing an *sp*² carbon-halogen bond. A variety of name reactions have been developed using organometallic carbon nucleophiles such as *in situ* generated acetylide anions (Sonogashira coupling). Mechanistic key steps of cross-coupling reactions, such as the Sonogashira coupling, typically include oxidative addition of the organic halide, transmetalation of the nucleophilic carbon, and reductive elimination to form the product. As an exception, in the Heck coupling of an aryl halide and a terminal alkene, a migratory insertion/β-hydride elimination sequence represents the key bond-forming step for the formation of the product (rather than reductive elimination).

Metal-catalyzed cross-coupling reactions may be homogenously or heterogeneously catalyzed. For example, the coupling can employ a homogenous catalyst, typically involving the use of traditional organic solvents. Further, it is also possible to perform cross-coupling reactions with a heterogeneous metal catalyst consisting of a metal dispersed on an inorganic surface or bound to a polymeric support with ligands. For example, Pd on carbon (Pd/C) can be used as a heterogenous catalyst.

Whereas the Sonogashira coupling of iodinated activated aromatics (i.e., of an aromatic without a carbonate group already present, e.g., iodinated anisole) with terminal alkynes is generally known, only three examples for metal-based cross-couplings of iodinated carbonates with alkynes exist to date. In all cases, a Boc-protected phenolic compound has been coupled. For example, Ferreira and Costello coupled Boc-protected 4-iodophenol with 4-pentyn-1-ol under Pd/Cu catalysis, employing trietylamine both as base and solvent [Costello, J. P.; Ferreira, E. M., Org. Lett. 2019, 21, 9934-9939]. Further, benzyl propargyl ether has been employed as coupling agent [Bates, R. W.; Gabel, C. J.; Ji, J.; Rama-Devi, T., Tetrahedron 1995, 51, 8199-8212]. Very recently, also a Boc-protected 2-formyl-5-iodo-quinolin-8-ol was coupled with 4-methoxyphenylacetylene [Ko, M.-S.; Rao, P. S.; Cho, D.-G., Molecules 2021, 26, 917]. However, no other couplings with alkynes, and no corresponding polymerizations of iodinated carbonates are known.

Along the same lines, Heck coupling reactions of iodinated activated aromatics (i.e., of aromatics without a carbonate group already present, e.g., iodinated anisole) with terminal alkenes are known. In contrast, in the context of cross-coupling reactions of iodinated carbonates with terminal alkenes, only one example is known to date. In this example, a Heck-type coupling of an iodinated phenolic substrate containing a Boc-protecting group is performed [Lu, Y.; Schiller, P. W., Synthesis 2001, 1639-1644; Lu, Y.; Weltrowska, G.; Lemieux, C.; Chung, N. N.; Schiller, P. W., Bioorg. Med. Chem. Lett. 2001, 11, 323-325]. No other such couplings of iodinated carbonates with alkenes, and no examples for corresponding polymerizations are known.

KR20140035882A discloses polycarbonates obtained from cross-coupling reactions.

Based on this prior art, it is a further object of the present invention to provide a process for preparing polycarbonates (other than the interphase phosgenation or the melt transesterification method) and to provide a polycarbonate as such, the process and the polycarbonate being based on existing, but also novel aromatic building blocks, especially bio-based building blocks. Preferably, this process should result in a polycarbonate having improved properties, especially with respect to mechanical and/or optical properties, heat resistance and/or weatherability.

At least one of the above-mentioned objects, preferably all of these objects, have been solved by the present invention.

Surprisingly, the inventors found a process for preparing a polycarbonate that provides an alternative to known processes such as interphase phosgenation or melt transesterification. More surprisingly, the inventors identified a process for preparing a polycarbonate with a repeating unit comprising two aromatic moieties being linked with each other and - within the repeating unit - one of the aromatic moieties being substituted with a carbonate group. Still surprisingly, the inventors found a process for preparing a polycarbonate with a repeating unit comprising two aromatic moieties being linked with each other and - within the repeating unit - one of the aromatic moieties being substituted with a carbonate group, wherein the carbonate group is introduced to the repeating unit without the need of separately forming the carbonate group. As mentioned, the inventors were able to find a process for preparing a polycarbonate, including a reaction for the formation of the repeating unit, comprising linking of two aromatic moieties with each other. Such a reaction mandatorily requires that the aromatic moieties comprise carbonate substituents in order to form a polymer backbone with repeating units, each repeating unit comprising a carbonate group substituting one of the aromatic moieties. Confronted with this objective, the inventors then identified a process for preparing a polycarbonate with a repeating unit that comprises two aromatic moieties being linked with each other, and - within the repeating unit - one of the aromatic moieties being substituted with a carbonate group, wherein said carbonate group is not affected by the process as such. In this context the term "affected" preferably means that the carbonate is not degraded.

Furthermore, the inventors identified a polycarbonate, obtainable by the process according to the invention. Also, the inventors identified a polycarbonate comprising novel chemical and physical properties when compared to polycarbonates known from the state of the art.

The inventors have identified a process and a polycarbonate, that employ/comprise existing, but also novel aromatic building blocks, especially bio-based building blocks. The process identified by the inventors results in a polycarbonate having improved properties, in particular with respect to mechanical and/or optical properties, heat resistance and/or weatherability. The same applies to the polycarbonate as such.

Surprisingly, it was identified that the metal-catalyzed coupling of an iodinated diaryl carbonate with a structure of formula (I) and a terminal alkyne with a structure of formula (IIa) or a terminal alkene with a structure of formula (IIb) can be used in order to link two aromatic moieties bearing a carbonate group, preferably both bearing a carbonate group. This reaction as such can be used according to the present invention to polymerize such aromatic moieties to give a polycarbonate. This reaction can be used for existing building blocks, but also for novel, especially bio-based building blocks (such as iodinated derivatives of guaiacol carbonate, also known as bis(2-methoxyphenyl) carbonate, and its derivatives, for example bis(2-methoxy-4-propylphenyl) carbonate). Moreover, the resulting polycarbonate obtained from this process preferably comprises improved properties with respect to mechanical and/or optical properties, heat resistance and/or weatherability.

Accordingly, the present invention provides a process for preparing a polycarbonate using metal-catalyzed cross-coupling, comprising a reaction of a compound with a structure of formula (I) 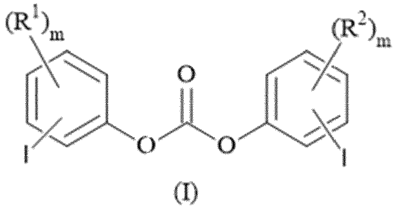 and a compound with a structure of formula (IIa) or (IIb) 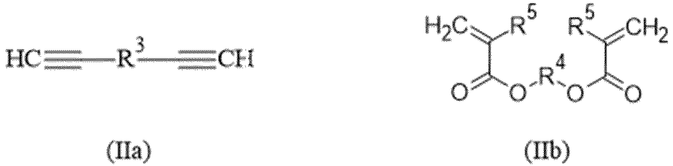 in the presence of a metal catalyst and a base, wherein
a) the reaction using compound (IIa) yields a polycarbonate comprising a repeating unit with a structure of formula (IIIa) 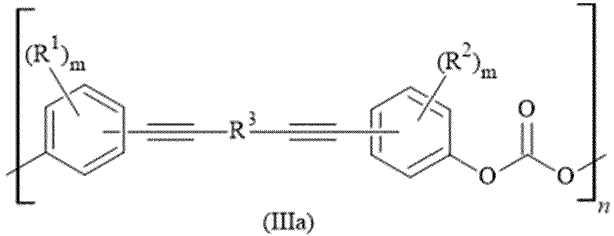 wherein the repeating unit with the structure of formula (IIIa) comprises two aromatic rings, a carbonate group -OC(=O)O- and a linking group with a structure of formula (IVa) 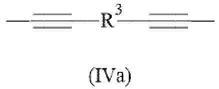 wherein one of the two aromatic rings is substituted with the carbonate group, the two aromatic rings are linked *via* the linking group, and the linking group in each repeating unit independently is either in *ortho-, meta- or para-*position with respect to the carbonate group,
b) the reaction using compound (IIb) yields a polycarbonate comprising a repeating unit with a structure of formula (IIIb) 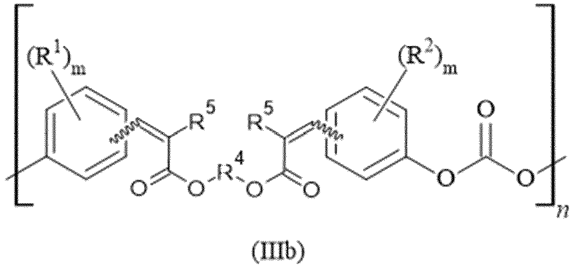 wherein the repeating unit with the structure of formula (IIIb) comprises two aromatic rings, a carbonate group -OC(=O)O- and a linking group with a structure of formula (IVb) 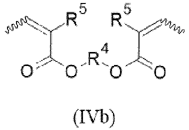 wherein one of the two aromatic rings is substituted with the carbonate group, the two aromatic rings are linked *via* the linking group and the linking group in each repeating unit independently is either in *ortho-, meta- or para-*position with respect to the carbonate group,
and wherein
- each m independently is 0 to 4, preferably 1 to 3,
- each R¹ and R² independently represents an R¹ substituent and an R² substituent, respectively, being capable of activating the aromatic ring which it substitutes by a mesomeric effect and/or an inductive effect,
- R³ represents
   ∘ an optionally substituted alkyl, alkenyl or alkynyl group, wherein this optionally substituted alkyl, alkenyl or alkynyl group is optionally interrupted by at least one hetero atom,
   ∘ an optionally substituted cycloalkyl or cycloalkenyl group, or
   ∘ an optionally substituted phenyl group,
- R⁴ represents
   ∘ an optionally substituted alkyl or alkenyl group,
   ∘ an optionally substituted cycloalkyl or cycloalkenyl group, or
   ∘ an optionally substituted aryl group,
- each R⁵ independently represents
   ∘ a hydrogen atom, or
   ∘ an optionally substituted alkyl or alkenyl group, wherein this optionally substituted alkyl or alkenyl group is optionally interrupted by an ester group, and
- n is the number of repeating units.

Polycarbonates in the context of the present invention may be homopolycarbonates or copolycarbonates; the polycarbonates may be linear or branched or cyclic depending on the type of monomers used in the present invention. For the purposes of the present invention, the expression "bio-based" is to be understood in the sense that the relevant chemical compound is at the filing date available and/or obtainable *via* a renewable and/or sustainable raw material and/or preferably is such a renewable and/or sustainable raw material. A renewable and/or sustainable raw material is preferably understood as meaning a raw material that is regenerated by natural processes at a rate that is comparable to its rate of depletion (see CEN/TS 16295:2012). The expression is used in particular to distinguish it from raw materials produced from fossil raw materials, also referred to in accordance with the invention as petroleum-based. Whether a raw material is bio-based or petroleum-based can be determined by the measurement of carbon isotopes in the raw material, since the relative amounts of the carbon isotope C¹⁴ are lower in fossil raw materials. This can be done, for example, in accordance with ASTM D6866-18 (2018) or ISO16620-1 to -5 (2015) or DIN SPEC 91236 2011-07. Exemplary bio-based carbonates are guaiacol carbonate and bis(2-methoxy-4-propylphenyl) carbonate. Further, iodinations of the bio-based carbonates with electrophilic iodinating agents (e.g., iodine monochloride in a halogenated solvent such as dichloromethane) can provide iodinated bio-based diaryl carbonates of formula (I) in the sense of this invention. Exemplary iodinated bio-based diaryl carbonates of formula (I) are bis(5-iodo-2-methoxyphenyl) carbonate and bis(5-iodo-2-methoxy-4-propylphenyl) carbonate.

Within the context of the present invention, reference is made to the mechanism of palladium-catalyzed Sonogashira and Heck cross-coupling reactions representing metal-catalyzed cross-coupling reactions, e.g., of an aryl halide with a terminal alkyne or a terminal alkene, respectively, in the presence of a palladium catalyst and a base, known to the person skilled in the art and described in various textbooks dealing with organic chemistry. The process according to the present invention may be based on a Sonogashira or a Heck cross-coupling reaction, but also includes amendments to the classical name reactions. Therefore, reference is rather made to the more general metal-catalyzed cross-coupling reaction. However, the person skilled in the art knowing and understanding the concepts of Sonogashira and Heck cross-couplings and once having perceived the present invention can transfer the principles of this general concept to the amendments of the process of the present invention.

Reference is further made to a substituent (of an aromatic ring) that is capable of activating the aromatic ring which it substitutes by a mesomeric effect and/or an inductive effect. The concept of a substituent activating an aromatic ring which it substitutes by a mesomeric effect and/or an inductive effect is known to the person skilled in the art. In this context, a diaryl carbonate may undergo electrophilic iodination reactions with an electrophilic iodinating agent to obtain an iodinated diaryl carbonate of formula (I) as the starting material for the reaction of the process according to the present invention. For example, the iodinating agent may be iodine monochloride (ICl) employed in a halogenated solvent (e.g., dichloromethane). Since an iodinated diaryl carbonate with a structure of formula (I) as the starting material for the reaction of the process according to the invention may not be generally commercially available, it may be provided by the described iodination of a diaryl carbonate prior to the process according to the invention.

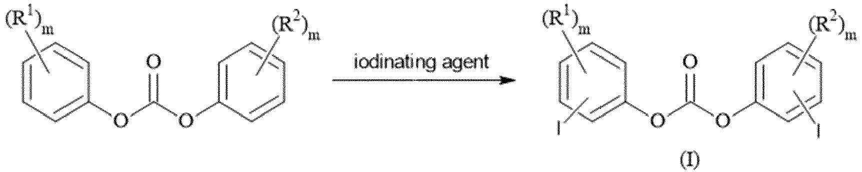

Within this context, by the selection of R¹ and/or R² substituent(s) on the aromatic ring(s) of the diaryl carbonate, the person skilled in the art can influence the structure of the resulting iodinated diaryl carbonate of formula (I), and accordingly, also the structure of the polycarbonate resulting from the metal-catalyzed cross-coupling reaction of the iodinated diaryl carbonate of formula (I). This is for the reason that, in the metal-catalyzed cross-coupling reaction of an iodinated diaryl carbonate of formula (I) and a terminal alkyne of structure (IIa) or a terminal alkene of structure (IIb), the iodine atoms in the iodinated diaryl carbonate of formula (I) are, each independently, formally replaced by (i.e., coupled at the same position) the linking group of formula (IVa) or (IVb), respectively, in the repeating unit of formula (IIIa) or (IIIb), respectively, of the respective polycarbonate obtained as the product of the process according to the invention. In other words, by influencing the positions of the iodine atoms on the aromatic rings of the diaryl carbonate of formula (I), the skilled person can determine the respective positions of the linking group in the resulting polycarbonate repeating units. For example, if the iodine atoms in the iodinated diaryl carbonate of formula (I) are positioned in *meta*-position with respect to the already present carbonate group, the linking group in the repeating unit of the polycarbonate resulting from the metal-catalyzed cross-coupling reaction of the iodinated diaryl carbonate of formula (I) and the terminal alkyne of structure (IIa) or the terminal alkene of structure (IIb) is in *meta-*position with respect to the carbonate group in the repeating unit (IIIa) or (IIIb), respectively, as well. The skilled person, aware of the concept of metal-catalyzed cross-coupling reactions, is able to understand and transfer this concept to amendments of the above example. Along those lines, by the selection of R¹ and/or R² substituent(s) on the aromatic ring(s) of the iodinated diaryl carbonate of formula (I), wherein each substituent R¹ and/or R² is capable of activating the aromatic ring which it substitutes by a mesomeric effect and/or an inductive effect, the metal-catalyzed cross-coupling reaction of the iodinated diaryl carbonate of formula (I) and the unsaturated compound with a structure of formula (IIa) or (IIb) can be facilitated. For example, in the case of R¹ and/or R² substituent representing a methoxy group capable of activating the aromatic ring which it substitutes by a positive mesomeric effect (+M-effect) as described below, this selection of the R¹ and/or R² substituent has been found to be beneficial for the reactivity of the iodinated diaryl carbonate of formula (I) comprising said substituent R¹ and/or R². In this context, the term "beneficial" is to be understood in the sense that, in the absence of the substituent R¹ and/or R², a higher reaction temperature is required to achieve full conversion in the reaction compared to when the above described beneficial activating R¹ and/or R² substituents are present. In this context, it should however also be noted that the number "m" in the formula (I), wherein each m independently is the number of substituents R¹ and/or R² on the aromatic ring which it substitutes (or not), may also be 0. In other words, each independently, the respective aromatic ring may also be substituted with no substituent R¹ and/or no substituent R² at all. In this context, in the reaction using compound (IIa), each m in formula (I) may independently be 0 to 4. Preferably, in the reaction using compound (IIa), each m in formula (I) independently is 1 to 3. More preferably, in the reaction using compound (IIa), each m in formula (I) independently is 1 or 2. Most preferably, in the reaction using compound (IIa), each m in formula (I) is 1, or each m in formula (I) is 2. In the reaction using compound (IIb), each m in formula (I) may independently be 0 to 4. Preferably, in the reaction using compound (IIb), each m in formula (I) independently is 1 to 3. More preferably, in the reaction using compound (IIb), each m in formula (I) independently is 1 or 2. Most preferably, in the reaction using compound (IIb), each m in formula (I) is 1, or each m in formula (I) is 2. In this context, in case each m independently is 0, i.e., the respective aromatic ring is substituted with no substituent R¹ and/or no substituent R² at all, the positive mesomeric effect (+M-effect) of the carbonate group -OC(=O)O- already present in a diaryl carbonate may be decisive for the structure of a corresponding iodinated diaryl carbonate of formula (I) resulting from electrophilic iodination of the diaryl carbonate with an electrophilic iodinating agent (such as iodine monochloride, employed in dichloromethane).

Preferably, the term "mesomeric effect" or M effect refers to the known resonance effect. Still preferably, the term refers to the delocalization of electrons in a molecule by the interaction of two pi bonds or between a pi bond and a lone pair of electrons present on an adjacent atom. The term is preferably used to describe the electronic effect of a substituent on an aromatic moiety based on relevant resonance structures. It often is symbolized by the letter M. The mesomeric effect can be negative (-M) when the substituent withdraws electrons from the aromatic ring through pi bonds - called resonance electron withdrawal. The effect can also be positive (+M, called resonance electron donation) when the substituent donates electrons through the pi bonds to the aromatic ring.

Preferably, the term "inductive effect" or I effect refers to the displacement of electrons *via* sigma bonds towards a more electronegative atom. Due to the inductive effect one end of a bond obtains a partial positive charge and the other end a partial negative charge. Relative inductive effects of substituents bonded to an aromatic ring are described with reference to hydrogen. For example, a substituent with a +I effect (electron-donating character) donates its sigma electrons to the aromatic ring more strongly than hydrogen will. In contrast, a substituent with a -I effect (electron-withdrawing character) will more strongly withdraw or accept the sigma electrons compared to hydrogen.

The M and I effect are known to the person skilled in the art. It is known that existing substituent groups on an aromatic ring may affect the overall reaction rate or have a directing effect on the positional isomer of the products that are formed. Here, an electron-donating group or electron-withdrawing group preferably is an atom or functional group that donates or withdraws, respectively, some of its electron density into a conjugated pi system *via* mesomeric or inductive effects. This makes the pi system more nucleophilic. In terms of regioselectivity, some existing substituent groups on the aromatic ring promote further substitution at the *ortho-* or *para*-position(s) with respect to themselves. Other groups favor further substitution at the *meta-*position*.* Those groups are known to the person skilled in the art. Substituents exhibiting a +I or +M effect may direct to the *ortho-* and/or *para-*position with respect to themselves. Substituents exhibiting a -I or -M effect may direct to the *meta-*position*.* As known to the person skilled in the art, a M effect of a substituent is in principle more important than a I effect. This means that a +M effect can overrule a small -I effect.

It was found that the process according to the present invention can be used to obtain a regular polymer backbone having a linking group of formula (IVa) or (IVb) 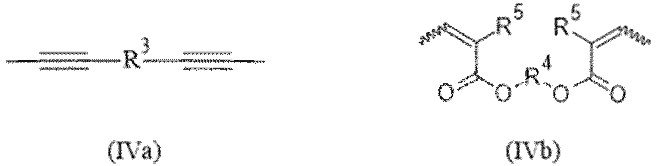 between two linked aromatic moieties which is either in *ortho-, meta-* or *para-*position with respect to the carbonate group. According to the present invention, *ortho-, meta-* or *para-* always refer to the position at the aromatic ring with respect to the mandatory carbonate group at the same ring, if not stated otherwise. The existing carbonate group has a small +M effect, and may be able to direct an electrophilic iodine to the *para-*position with respect to the carbonate group. However, this effect may be overruled by additional substituents at the aromatic rings. According to the present invention, each R¹ and R² in formula (I) and/or (IIIa) and/or (IIIb) independently represents an additional R¹ and R² substituent, respectively, being capable of activating the aromatic ring which it substitutes by a mesomeric effect and/or an inductive effect. For example, all additional R¹ and/or R² substituents may exhibit a +M or +I effect. Moreover, each m in formula (I) and in formula (IIIa) or (IIIb) independently is 0 to 4, preferably 1 to 3. This means that one or more additional substituents R¹ and/or R² may be attached at the aromatic rings (m is 1 to 4). Alternatively, no additional substituents R¹ and/or R² may be attached at the aromatic rings (m is 0). In this context, in the reaction using compound (IIa), each m may independently be 0 to 4. Preferably, in the reaction using compound (IIa), each m independently is 1 to 3. More preferably, in the reaction using compound (IIa), each m independently is 1 or 2. Most preferably, in the reaction using compound (IIa), each m is 1, or each m is 2. In the reaction using compound (IIb), each m may independently be 0 to 4. Preferably, in the reaction using compound (IIb), each m independently is 1 to 3. More preferably, in the reaction using compound (IIb), each m independently is 1 or 2. Most preferably, in the reaction using compound (IIb), each m is 1, or each m is 2. In this context, it has been found that the additional R¹ and R² substituents may overrule a *para-*directing effect of the carbonate group, so that a very selective iodination reaction may take place and, resulting from a metal-catalyzed cross-coupling of the iodinated diaryl carbonate of formula (I) that may be obtained from the electrophilic iodination reaction, a regular polycarbonate polymer may be found which has *meta*-linkages with respect to the carbonate group.

For example, if the R¹ and/or R² substituent has a *para-*directing effect (i.e., the R¹ and/or R² substituent is capable of directing an electrophilic iodine to a position at the aromatic ring which is in *para-*position with respect to the R¹ and/or R² substituent, respectively) and this R¹ and/or R² substituent is in *ortho-*position with respect to the carbonate group substituting the same aromatic ring, a *meta-*linkage with respect to the carbonate group is obtained in polycarbonates resulting from a coupling of a terminal alkyne of formula (IIa) or a terminal alkene of formula (IIb) with an iodinated diaryl carbonate of formula (I) incorporating said *para-*directing R¹ and/or R² substituent in *ortho-*position with respect to the carbonate group substituting the same aromatic ring. Thus, a selective coupling may take place wherein a polycarbonate is obtained which comprises essentially *meta-*linkages. In this context, it is however to be noted that a "*para*-directing" R¹ and/or R² substituent is generally to be understood as *ortho-* and *para*-directing substituent (in contrast to a substituent that solely directs to a *meta-*position)*.* The skilled person knows that a substituent may either be *para*/*ortho*-directing or meta-directing. Transferred to the present case, the "*para*-directing" R¹ and/or R² substituent principally directs in *para-* and *ortho-* position*.* In case that such a *"para-*directing" R¹ and/or R² substituent (which is generally *para-* and *ortho*-directing) is present in *ortho-*position with respect to the carbonate group (substituting the same aromatic ring), sterical hindrance may lead to a fully *para*-selective substitution (leading to *meta-*linkages)*.* In this case no *ortho-*substitution may be observed. Examples for such *para*-directing substituents are alkoxy groups such as methoxy groups.

The R¹ and/or R² substituent can also be positioned in *meta-* or *para*-position with respect to the carbonate group at the same aromatic ring. The person skilled in the art knows how the directing effect of the additional R¹ and/or R² substituent(s) and their position at the aromatic ring with respect to the carbonate group substituting the same aromatic ring can influence the resulting iodination positions and thus, also the linkages in the polycarbonate resulting from the cross-coupling at the same position of the aromatic ring. The effect of a selective reaction is even more pronounced if two or three R¹ and/or R² substituents are present in addition to the carbonate group which are capable due to their chemical nature to direct the electrophilic iodine to the very same carbon atom. The person skilled in the art knows how different substituents attached at the aromatic ring(s) affect the resulting polycarbonate.

Additionally, the compound of formula (IIa) or (IIb) determines the structure of the linking group of formula (IVa) or (IVb), respectively, in the repeating unit of formula (IIIa) or (IIIb), respectively, of the polycarbonate resulting from the process according to the invention.

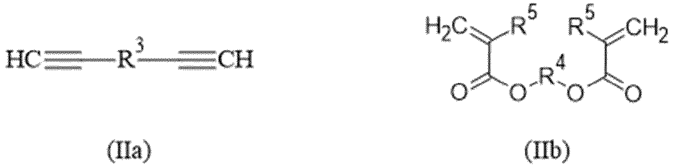

The compound of formula (IIa) is a terminal alkyne bearing an R³ substituent which can be an optionally substituted alkyl, alkenyl or alkynyl group, wherein this optionally substituted alkyl, alkenyl or alkynyl group is optionally interrupted by at least one hetero atom. Alternatively, R³ represents an optionally substituted cycloalkyl or cycloalkenyl group. Alternatively, R³ represents an optionally substituted phenyl group. Accordingly, R³ in the linking group of formula (IVa) and in the repeating unit of formula (IIIa) is any of the groups discussed above, depending on what R³ represents in the compound of formula (IIa). The compound of formula (IIb), in turn, is a terminal alkene bearing an R⁴ substituent and an R⁵ substituent. R⁴ represents an optionally substituted alkyl or alkenyl group. Alternatively, R⁴ represents an optionally substituted cycloalkyl or cycloalkenyl group. Alternatively, R⁴ represents an optionally substituted aryl group. R⁵ represents a hydrogen atom. Alternatively, R⁵ represents an optionally substituted alkyl or alkenyl group, wherein this optionally substituted alkyl or alkenyl group is optionally interrupted by an ester group. Accordingly, R⁴ and/or R⁵ in the linking group of formula (IVb) and in the repeating unit of formula (IIIb) is any of the groups discussed above, depending on what R⁴ and/or R⁵ represent in the compound of formula (IIb). The carbon atoms of the R³, R⁴ and/or R⁵ substituent can be linear or branched. Additionally, in case R³, R⁴ and/or R⁵ represent an alkenyl group, this alkenyl group may comprise one or more double bonds. As such, in case R³ represents an alkynyl group, this alkynyl group may comprise one or more triple bonds. Altogether, by choosing the substituents R³, R⁴ and/or R⁵ of the compounds of formula (IIa) or (IIb), the person skilled in the art is able to tailor the structure of the resulting linking group in the repeating unit with a structure of formula (IIIa) or (IIIb) and therefore, the skilled person is able to tailor the structure of the polycarbonate as a whole.

"Alkyl" in the context of the invention, for example and if not mentioned differently, refers to a linear or branched hydrocarbon which is saturated and therefore, it comprises only carbon-carbon (C-C) single bonds. Preferably, alkyl groups according to the present invention have 1 to 20 carbon atoms. Moreover, alkyl groups according to the present invention may be interrupted by at least one hetero atom, or an ester group -C(=O)O-, or a combination of these. The alkyl structures can be limited in choice, in case the invention defines the carbon atoms of an alkyl group in a different manner. Hetero atoms may, e.g., be selected from a nitrogen atom or an oxygen atom. In this context it should be noted that, in case the hetero atom is a nitrogen atom, the nitrogen may, in addition to interrupting the alkyl, be further substituted with a substituent (other than a hydrogen atom), meaning that the nitrogen atom may represent a trisubstituted nitrogen atom as part of a tertiary amine.

"Alkenyl" in the context of the invention, for example and if not mentioned differently, refers to a linear or branched hydrocarbon which is unsaturated and comprises one or more carbon-carbon (C=C) double bonds, in addition to single bonds. Preferably, alkenyl groups according to the present invention have 1 to 20 carbon atoms. Moreover, the alkenyl groups according to the present invention may be interrupted by at least one hetero atom, or an ester group -C(=O)O-, or a combination of these. These structures can be limited in choice, in case the invention defines the carbon atoms of an alkenyl group in a different manner. Hetero atoms may, e.g., be selected from a nitrogen atom or an oxygen atom. In this context it should be noted that, in case the hetero atom is a nitrogen atom, the nitrogen may, in addition to interrupting the alkenyl, be further substituted with a substituent (other than a hydrogen atom), meaning that the nitrogen atom may represent a trisubstituted nitrogen atom as part of a tertiary amine.

"Alkynyl" in the context of the invention, for example and if not mentioned differently, refers to a linear or branched hydrocarbon which is unsaturated and comprises one or more carbon-carbon (C≡C) triple bonds, in addition to single bonds. Preferably, alkynyl groups according to the present invention have 1 to 20 carbon atoms. Moreover, the alkynyl groups according to the present invention may be interrupted by at least one hetero atom. These structures can be limited in choice, in case the invention defines the carbon atoms of an alkynyl group in a different manner. Hetero atoms may, e.g., be selected from a nitrogen atom or an oxygen atom. In this context it should be noted that, in case the hetero atom is a nitrogen atom, the nitrogen may, in addition to interrupting the alkynyl, be further substituted with a substituent R⁶ (other than a hydrogen atom), meaning that the nitrogen atom may represent a trisubstituted nitrogen -N(R⁶)-. For example, an alkynyl group according to the invention may be interrupted by a trisubstituted nitrogen -N(R⁶)-, wherein the further substituent R⁶ represents an alkynyl as defined above. Preferably, R⁶ represents a linear or branched alkynyl group having 1 to 20 carbon atoms. More preferably, R⁶ represents a linear or branched alkynyl group having 3 carbon atoms. Most preferably, R⁶ represents a linear alkynyl group having 3 carbon atoms.

"Cycloalkyl" in the context of the invention, for example and if not mentioned differently, refers to a carbocyclic hydrocarbon which is saturated and therefore, it comprises only carbon-carbon (C-C) single bonds. Preferably, cycloalkyl groups according to the present invention have 6 to 12 carbon atoms. They can be mono- or polycyclic. Preferred examples for a C₆ to C₁₂ cycloalkyls are cyclohexane, cycloheptane, cyclooctane, cyclodecane, cycloundecane or cyclododecane. Most preferred is cyclohexane.

"Cycloalkenyl" in the context of the invention, for example and if not mentioned differently, refers to a carbocyclic hydrocarbon which is unsaturated and comprises one or more carbon-carbon (C=C) double bonds, in addition to single bonds. Preferably, cycloalkenyl groups according to the present invention have 6 to 12 carbon atoms. They can be mono- or polycyclic. Preferred examples for C₆ to C₁₂ cycloalkyls are cyclohexene, cycloheptene, cyclooctene, cyclodecene, cycloundecene or cyclododecene. Most preferred is cyclohexene.

"Alkoxy" in the context of the invention, for example and if not mentioned differently, refers to a linear or branched alkyl group singularly bonded to oxygen (-OR). Preferably, alkoxy groups according to the present invention have 1 to 6 carbon atoms and thus, comprise methoxy, ethoxy, *n-*propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexyloxy, cyclopentoxy, *n-*hexyloxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy. These structures can be limited in choice, in case the invention defines the carbon atoms of an alkoxy group in a different manner.

The above enumerations should be understood by way of example and not as a limitation.

"Aryl" in the context of the invention, for example and if not mentioned differently, refers to an organic group derived from an aromatic hydrocarbon by the removal of at least one hydrogen atom. Preferably, aryl groups according to the invention comprise at least one phenyl group. In this context, "phenyl" in the context of the invention, for example and if not mentioned differently, refers to an aryl group derived from benzene (C₆H₆) by the removal of at least one hydrogen atom. Preferably, phenyl groups according to the invention have 6 to 12 carbon atoms in total. For example, a phenyl group according to the invention may be an aryl group derived from benzene (C₆H₆) by the removal of two hydrogen atoms, i.e., an organic group -C₆H₄-.

In the context of the present invention, "I" refers to an iodine substituent. In this context, it should however be noted that the iodinated diaryl carbonate of formula (I) may also comprise a substituent "I_{q}" (instead of the substituent "I"), wherein I refers to an iodine atom, q is a number of iodine atoms on the aromatic ring which I_{q} substitutes, and wherein q can be a number of more than 1. For example, each q can be 2, such that in the compound of formula (I), each aromatic ring is substituted with two iodine atoms. For example, in case each q is 2, the two iodine atoms substituting, each independently, the two aromatic rings in the compound of formula (I), may both be attached to the respective aromatic ring in *meta*-position with respect to the carbonate group already present in the compound of formula (I), leading to multiple *meta*-linkages in the resulting branched polycarbonates.

Furthermore, formulas (IIIa) and (IIIb) recite "n" as number of repeating units. Preferably, n is 6 to 60, more preferably it is 10 to 55, even more preferably it is 20 to 50, still more preferably it is 25 to 45 and most preferably it is 30 to 40. Depending on the length of the yielded polycarbonate (so depending on the number n of repeating units), physical, chemical and mechanical properties of the polycarbonate may vary. Depending on the number of repeating units, microscopic and/or macroscopic structures of the polycarbonate may change as well. By the preferred number n of repeating units, an optimum balance between processability and mechanical properties of the yielded polycarbonate can be established. Consequently, the skilled person may choose the number of n to tailor dedicated properties of the polycarbonate.

According to the present invention, a metal catalyst is required for the cross-coupling reaction of the iodinated diaryl carbonate of formula (I) and the terminal alkyne of formula (IIa) or the terminal alkene of formula (IIb). The term "metal catalyst" is known to the person skilled in the art. Generally, a catalyst represents a substance that increases the rate of a chemical reaction without itself undergoing any permanent chemical change. If the catalyst and reactants are in the same phase (liquid/solid or gas), the catalyst is referred to as a homogeneous catalyst. Metal compounds, e.g., palladium(II) compounds employed in classical organic solvents, are examples of homogeneous catalysts. In contrast, if the catalyst and reactants are in different phases, the catalyst is referred to as a heterogeneous catalyst. Examples of heterogeneous catalysts are pure metals such as palladium (Pd) representing unsupported heterogeneous catalysts. When a heterogeneous catalyst is affixed to a material with a high surface area, such as carbon, it represents a supported heterogeneous catalyst, e.g., palladium on carbon (Pd/C). The support offers stability to the heterogeneous metal catalyst. Particularly, transition metals are suitable metals for use as metal catalysts, owing to their ability to exist in a variety of oxidation states, interchange between oxidation states, form complexes with organic ligands, and act as a good source of electrons. In the context of the present invention, the metal catalyst is necessary to perform the key steps of the metal-catalyzed cross-coupling. The key steps of the metal-catalyzed cross-coupling, depending on the reaction conditions, may involve oxidative addition of an organic halide, transmetalation of the nucleophilic carbon, and reductive elimination or a migratory insertion/β-hydride elimination sequence for the formation of the product. In addition to enabling and accelerating the cross-coupling reaction, the metal catalyst may be able to impose regioselectivity and/or stereoselectivity in the polycarbonates resulting from the process according to the invention.

Further, according to the present invention, a base is required for the cross-coupling reaction of the iodinated diaryl carbonate of formula (I) and the terminal alkyne of formula (IIa) or the terminal alkene of formula (IIb). The term "base" is known to the person skilled in the art. Particularly, definitions of the term "base" have been given by Arrhenius, Bronsted-Lowry, and Lewis. According to Brønsted-Lowry, an acid is a proton (hydrogen nucleus) donor and a base is a proton (hydrogen nucleus) acceptor, whereas the acid and the corresponding base are referred to as conjugate acid-base pairs. According to the definition of Lewis, an acid is an electron-pair acceptor and a base is an electron-pair donor. These bases are referred to as "Lewis acids" and "Lewis bases", and are electrophiles and nucleophiles, respectively, in organic chemistry, and ligands in coordination chemistry. In the context of the present invention, for example, in a palladium-catalyzed Heck cross-coupling reaction, the base may be crucial for the regeneration of a palladium(0) species by reductive elimination of a palladium(II) species as part of the catalytic cycle. The regenerated palladium(0) species may then be able to undergo oxidative addition and start a new catalytic cycle. In another example, in a Sonogashira cross-coupling reaction, the base may be needed for the deprotonation of a terminal alkyne and generation of a corresponding acetylide anion in the presence of a copper co-catalyst, which then may be transmetalated to a palladium catalytic species to enable further catalytic steps and finally, the generation of an alkyne-substituted cross-coupling product.

In a preferred embodiment of the invention, a process is provided, wherein at least one R¹ substituent and/or at least one R² substituent is in *ortho-*position with respect to the carbonate group substituting the same aromatic ring. Preferably, both of the at least one R¹ and R² substituents are in *ortho-* or *para-*position with respect to the carbonate group.

Further, in a preferred embodiment of the invention, a process is provided, wherein each R¹ substituent and each R² substituent independently represents an alkyl group or an alkoxy group, more preferably an alkyl or alkoxy group having 1 to 6 carbon atoms. They can be linear or branched. Alkyl groups exhibit a +I effect, alkoxy groups exhibit a +M effect. A substituent which has 1 to 6 carbon atoms is preferred for steric reasons. Thus, preferably each R¹ substituent and each R² substituent independently represents methyl, ethyl, *n*-propyl, isopropyl, *n*-butyl, *sec*-butyl, *tert-*butyl*, n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexyloxy, cyclopentoxy, n-hexyloxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

Overall, the person skilled in the art knows how the choice of any compound of formula (I) has an effect on the resulting polycarbonate comprising a repeating unit with a structure of formula (IIIa) or (IIIb). Thus, the skilled person is able to predict the influences of the structure of the compound of formula (I). Preferably, the compound of formula (I) is selected from iodinated bio-based diaryl carbonates, e.g., iodinated guaiacol carbonate or iodinated bis(2-methoxy-4-propylphenyl) carbonate. In the case of iodinated guaiacol carbonate, m is 1 for R¹ as well as for R², and the R¹ as well as the R² substituent each is a methoxy group, each located in *ortho-*position with respect to the carbonate group substituting the same aromatic ring. For iodinated bis(2-methoxy-4-propylphenyl) carbonate, m is 2 for R¹ as well as for R², wherein one R¹ and one R² substituent each is a methoxy group, each located in *ortho-*position with respect to the carbonate group substituting the same aromatic ring, and one R¹ and one R² substituent each is an *n*-propyl group, each located in *para-*position with respect to the carbonate group substituting the same aromatic ring. The named exemplary bio-based carbonates, i.e., the guaiacol carbonate or bis(2-methoxy-4-propylphenyl) carbonate, are both substituted with R¹ and R² substituents exhibiting a +M effect (here: methoxy) - wherein these methoxy substituents are in *ortho-*position with respect to the carbonate group substituting the same aromatic ring, and both are capable of directing an electrophilic iodine to a position at the aromatic ring which is in *para-*position with respect to themselves, and in *meta-*position with respect to the carbonate group - may be successfully iodinated in the described position with respect to the carbonate group. Further, the iodinated bio-based diaryl carbonates of formula (I), such as bis(5-iodo-2-methoxyphenyl) carbonate or bis(5-iodo-2-methoxy-4-propylphenyl) carbonate, have been successfully coupled (at the same position) with a terminal alkyne of formula (IIa) or terminal alkene of formula (IIb), in model reactions.

The yielded polycarbonate comprises a repeating unit with a structure of formula (IIIa) or (IIIb). In formula (IIIa), R³ represents an optionally substituted alkyl, alkenyl or alkynyl group, wherein this optionally substituted alkyl, alkenyl or alkynyl group is optionally interrupted by at least one hetero atom. Alternatively, R³ represents an optionally substituted cycloalkyl or cycloalkenyl group. Alternatively, R³ represents an optionally substituted phenyl group. In a preferred embodiment, R³ represents an alkyl group having 1 to 20 carbon atoms, wherein this alkyl group is optionally interrupted by at least one hetero atom, and wherein the at least one hetero atom is preferably selected from an oxygen atom or a nitrogen atom. In another preferred embodiment, R³ represents a phenyl group, or a substituted phenyl group having 6 to 12 carbon atoms in total. Even more preferably, R³ represents an alkyl group not being interrupted and having 1 to 8 carbon atoms, most preferably 4 carbon atoms. The person skilled in the art knows how the choice of any compound of formula (IIa) has an effect on the resulting polycarbonate comprising a repeating unit with a structure of formula (IIIa). Thus, the skilled person is able to predict the influences of the structure of the compound of formula (IIa). In a most preferred embodiment of the present invention a process is provided, wherein the compound of formula (IIa) is 1,7-octadiyne, wherein R³ represents a linear alkyl group not being interrupted and having 4 carbon atoms. It has been found that such a compound can successfully serve as coupling partner for a iodinated bio-based diaryl carbonate of formula (I), such as bis(5-iodo-2-methoxyphenyl) carbonate or bis(5-iodo-2-methoxy-4-propylphenyl) carbonate, in model reactions. In formula (IIIb), in turn, R⁴ represents an optionally substituted alkyl or alkenyl group. Alternatively, R⁴ represents an optionally substituted cycloalkyl or cycloalkenyl group. Alternatively, R⁴ represents an optionally substituted aryl group. Preferably, R⁴ represents an alkyl group having 1 to 20 carbon atoms. Further, in formula (IIIb), R⁵ represents a hydrogen atom. Alternatively, R⁵ represents an optionally substituted alkyl or alkenyl group, wherein this optionally substituted alkyl or alkenyl group is optionally interrupted by an ester group. Preferably, R⁵ represents a hydrogen atom, or an alkyl group having 1 to 20 carbon atoms, wherein this alkyl group is optionally interrupted by an ester group. Again, the person skilled in the art knows how the choice of any compound of formula (IIb) affect the resulting polycarbonate comprising a repeating unit with a structure of formula (IIIb). Thus, the skilled person is able to predict the influences of the structure of the compound of formula (IIb). In a preferred embodiment of the present invention a process is provided, wherein the compound of formula (IIb) is ethane-1,2-diyl diacrylate. Thus, R⁴ represents a linear alkyl group having 2 carbon atoms, while R⁵ represents a hydrogen atom. Such compounds were successfully reacted with iodinated diaryl carbonates, such as bis(5-iodo-2-methoxy-4-propylphenyl) carbonate, in model reactions.

Within the context of the present invention, the linking group of formula (IVa) and (IVb) in each repeating unit of formula (IIIa) and (IIIb), respectively, of the polycarbonate resulting from the reaction of the iodinated diaryl carbonate of formula (I) and the terminal alkyne of formula (IIa) or the terminal alkene of structure (IIb), respectively, independently is either in *ortho-, meta- or para-*position with respect to the carbonate group substituting the same aromatic ring. In a preferred embodiment of the present invention, the linking group of formula (IVa) and/or (IVb) in each repeating unit of formula (IIIa) and/or formula (IIIb), respectively, of the resulting polycarbonate independently is in *meta-*position with respect to the carbonate group substituting the same aromatic ring. In this case, each of the iodine atoms in the iodinated diaryl carbonate of formula (I) independently is in *meta-*position with respect to the carbonate group substituting the same aromatic ring as well. In other words, if each of the iodine atoms in the iodinated diaryl carbonate of formula (I) independently is in *meta-*position with respect to the carbonate group substituting the same aromatic ring, the linking group of formula (IVa) and/or (IVb) in each repeating unit of formula (IIIa) and/or formula (IIIb), respectively, of the resulting polycarbonate independently is in *meta-*position with respect to the carbonate group substituting the same aromatic ring as well, i.e., *meta-*linkages are observed in the resulting polycarbonate. This is for the reason that, as explained above, in the metal-catalyzed cross-coupling reaction of the iodinated diaryl carbonate of formula (I) and the terminal alkyne of formula (IIa) or the terminal alkene of formula (IIb), the iodine atoms in the iodinated diaryl carbonate of formula (I) are, each independently, formally replaced by (i.e., coupled at the same position with) the linking group of formula (IVa) or (IVb), respectively, in the repeating unit of formula (IIIa) or (IIIb), respectively, of the respective polycarbonate obtained as the product of the process according to the invention. For example, the iodinated diaryl carbonate of structure (I) may be an iodinated bio-based carbonate, e.g., iodinated guaiacol carbonate or iodinated bis(2-methoxy-4-propylphenyl) carbonate. For example, the iodinated bio-based carbonate of structure (I) may be a bio-based diaryl carbonate iodinated in *meta-*position with respect to the carbonate group substituting the same aromatic ring, e.g., bis(5-iodo-2-methoxyphenyl) carbonate or bis(5-iodo-2-methoxy-4-propylphenyl) carbonate. In this context, an iodinated diaryl carbonate of formula (I), wherein each of the iodine atoms independently is in *meta-*position with respect to the carbonate group substituting the same aromatic ring, may be obtained from an electrophilic iodination reaction of a corresponding (non-iodinated) diaryl carbonate, comprising at least one substituent R¹ and/or R² on each of the aromatic rings being capable of activating the aromatic ring which it substitutes by a mesomeric effect and/or an inductive effect, with an electrophilic iodinating agent. Accordingly, by the selection of the R¹ and/or R² substituent(s) on the aromatic ring(s) of the diaryl carbonate, the person skilled in the art may influence the structure of the resulting iodinated diaryl carbonate of formula (I), and the structure of the polycarbonate (i.e., the linkages in the polycarbonate) resulting from the metal-catalyzed cross-coupling reaction of said iodinated diaryl carbonate of formula (I).

In a preferred embodiment of the present invention, each of the two aromatic rings in each repeating unit of formula (IIIb) independently is substituted by the linking group (comprising the substituents R⁴ and R⁵) such that each repeating unit represents an (*E,E*)-isomer. In this context, in the structure of the repeating unit of formula (IIIb) of the polycarbonate resulting from the process according to the invention, the C-C single bonds directly attached to the aromatic ring and to the terminal C=C double bonds of the linking group are each independently shown as undefined stereo bonds(C 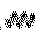 C). This is not to be understood as a limitation but for the reason that, depending on the selection of the substituents R⁴ and R⁵, which may represent optionally substituted groups themselves, the repeating unit of formula (IIIb) in the polycarbonate resulting from the process according to the invention may represent different isomers. Generally, in compounds containing a C=C double bond, the free rotation around the bond axis is prevented. Therefore, in compounds with C=C double bonds (alkenes), (*E*/*Z*)-isomers can exist, differing in the positions of the substituents on the double-bonded atoms. The (*E*/*Z*) nomenclature, also known as Cahn-Ingold-Prelog (CIP) nomenclature, is known to the person skilled in the art for naming isomers and is described in various textbooks dealing with organic chemistry. According to the CIP nomenclature, substituents on the C=C double bond are ordered by the CIP priority rules. In this context, an isomer is called a (*Z*) isomer (Z: "zusammen" = together) if the substituents with higher priority are on the same side of the double bond. In contrast, if the substituents with higher priority are on opposite sides of the double bond, the isomer is called an (*E*) isomer (E: "entgegen" = apart). (*E*/*Z*)-isomers are diastereomers, because they are stereoisomers of the same constitution, that is, the connections between every atom are the same, and the molecules do not have a mirror-image relationship. Thus, they have different physical and chemical properties. Accordingly, by the selection of the R⁴ and R⁵ substituents representing optionally substituted groups on the terminal alkene of formula (IIb) and of the reaction conditions of the polymerization reaction, e.g., the selection of a certain metal catalyst, the person skilled in the art may influence the structure of the repeating unit of formula (IIIb) in the polycarbonate obtained from the process according to the invention, meaning that, the skilled person can influence the structure and properties of the resulting polycarbonate comprising the repeating unit of formula (IIIb). According to the present invention, as described above, the selection is preferably performed such that each repeating unit of formula (IIIb), wherein each of the two aromatic rings independently is substituted by the linking group (comprising the substituents R⁴ and R⁵), represents an (*E,E*)-isomer.

According to the present invention, the process comprises a reaction of a compound with a structure of formula (I) and a compound with a structure of formula (IIa) or (IIb) in the presence of a metal catalyst and a base. The compound of formula (I) is an iodinated diaryl carbonate, the compound of formula (IIa) is a terminal alkyne, and the compound of formula (IIb) is a terminal alkene. In the context of the present invention, it should however be noted that it is not limited to the use of a terminal alkene of formula (IIb). Rather, it should be understood that principally, terminal alkenes other than the acrylate derivatives of formula (IIb) shown - i.e., terminal alkenes other than being interrupted by two ester groups -C(=O)O- having an electron-withdrawing effect as defined below and as such, being capable of activating the alkene in a metal-catalyzed cross-coupling reaction with the compound of formula (I) - may be employed in the reaction as well. The skilled person is well-aware of the effects of electron-withdrawing groups directly attached to a terminal double bond of a terminal alkene and thus, being capable of activating said alkene in a metal-catalyzed cross-coupling reaction. For example, electron-withdrawing groups other than ester groups may be directly attached to a terminal double bond of a terminal alkene to activate said alkene in a cross-coupling reaction with the compound of formula (I), preferably resulting in a selective transformation towards an (*E,E*)-isomer, with respect to the repeating unit of a resulting polycarbonate.

In a preferred embodiment of the invention, the compound of formula (IIa) or the compound of formula (IIb) is added in an amount of 0.1 to 10.0 equivalents, with respect to the compound of formula (I). Preferably, the compound of formula (IIa) or the compound of formula (IIb) is added in an amount of 0.1 to 5.0 equivalents, with respect to the compound of formula (I). More preferably, the compound of formula (IIa) or the compound of formula (IIb) is added in an amount of 0.5 to 1.5 equivalents, with respect to the compound of formula (I). It was found that having the above equivalents of the compound of formula (IIa) or (IIb) is beneficial for obtaining a good yield.

In a preferred embodiment of the present invention, the metal catalyst is a transition metal catalyst. Transition metals are particularly suitable metals for use as metal catalysts, owing to their ability to exist in a variety of oxidation states, interchange between oxidation states, form complexes with organic ligands, and act as a good source of electrons. The transition metal catalyst may be applied as a homogenous or heterogenous metal catalyst as described above. For example, the transition metal catalyst may comprise palladium (Pd), copper (Cu), nickel (Ni), or gold (Au). Preferably, the transition metal catalyst comprises palladium and/or copper. This means that, in one alternative, the transition metal catalyst comprises palladium but no copper. For example, the transition metal catalyst may be bis(triphenylphosphine)palladium(II) dichloride [Pd(PPh₃)₂Cl₂]. In a second alternative, the transition metal catalyst may comprise palladium and copper. In this context, in the reaction mechanism of a reaction employing a beneficial combination of copper and palladium as the transition metal catalyst, meaning that a palladium compound and a copper compound are each independently added to the reaction mixture, copper may act as a copper co-catalyst facilitating transmetalation of a nucleophilic carbon to a catalytically active palladium species generated from the palladium compound. For example, the transition metal catalyst may be a combination of Pd(PPh₃)₂Cl₂ and copper(I) iodide (CuI), or a combination of palladium on carbon (Pd/C) and CuI. In a third alternative, the transition metal catalyst may comprise copper, but no palladium. For example, the transition metal catalyst may be a combination of CuI and triphenylphosphine (PPh₃) without palladium. More preferably, the transition metal catalyst is selected from Pd(PPh₃)₂Cl₂, a combination of Pd(PPh₃)₂Cl₂ and CuI, a combination of Pd/C and CuI, or a combination of CuI and PPh₃. Most preferably, the metal catalyst is selected from Pd(PPh₃)₂Cl₂, or a combination of Pd(PPh₃)₂Cl₂ and CuI.

The metal catalyst and its amount upon addition to the reaction mixture may be selected depending on whether the compound of formula (IIa) or the compound of formula (IIb) is used in the reaction with the iodinated diaryl carbonate of formula (I). In a preferred embodiment of the invention, in the reaction using the compound of formula (IIa), the metal catalyst is a combination of Pd(PPh₃)₂Cl₂ and CuI in a molar ratio of 1:2, respectively. Pd(PPh₃)₂Cl₂ and CuI are each independently added to the reaction mixture. In this context, Pd(PPh₃)₂Cl₂ and CuI can be added in an amount of 0.1 to 10 mol% and 0.2 to 20 mol%, respectively, with respect to the compound of formula (I). Preferably, Pd(PPh₃)₂Cl₂ and CuI are added in an amount of 2 to 6 mol% and 4 to 12 mol%, respectively, with respect to the compound of formula (I). More preferably, Pd(PPh₃)₂Cl₂ and CuI are added in an amount of 4 mol% and 8 mol%, respectively, with respect to the compound of formula (I). In a further preferred embodiment of the present invention, in the reaction using the compound of formula (IIb), the metal catalyst is Pd(PPh₃)₂Cl₂, wherein Pd(PPh₃)₂Cl₂ is added in an amount of 0.1 to 5 mol%, preferably 2 to 4 mol%, more preferably 3 to 4 mol%, with respect to the compound of formula (I).

In yet another preferred embodiment of the invention, the base is an amine. Preferably, the amine is a tertiary amine. More preferably, the base is triethylamine (NEt₃) or*N,N-*dicyclohexylmethylamine (Cy₂NMe). Most preferably, the base is triethylamine (NEt₃). In a preferred embodiment of the present invention, the base is added in an amount of 2.0 to 10.0 equivalents with respect to the compound of formula (I). Preferably, the base is added in an amount of 2.0 to 5.0 equivalents with respect to the compound of formula (I). More preferably, the base is added in an amount of 2.0 to 4.0 equivalents, with respect to the compound of formula (I).

Depending on the substitution pattern on the starting materials of formula (I), and (IIa) or (IIb), the reaction may be carried out at different temperatures to obtain good yields of the desired polycarbonate. Preferably, the reaction is carried out at room temperature, or at a reaction temperature of 30 °C to 190 °C. In this context, the reaction may be carried out under reflux conditions, wherein the reaction temperature corresponds to the boiling point of a solvent used. Most preferred is a reaction temperature of 70 °C to 80 °C. It has been found that these reaction conditions are beneficial for the yield of the desired polycarbonate. In particular, it has been found that a reaction temperature of 70 °C to 80 °C is beneficial for the yield. However, the person skilled in the art is able to adapt the reaction temperature and the reaction time in order to optimize yields.

Additionally, it is preferred that the reaction is carried out under inert atmosphere so that no oxygen can hamper the desired reaction and the yield of the desired polycarbonate. However, this is not to be understood as limiting the present invention to reactions carried out under inert atmosphere. In this context, the skilled person is aware of existing possibilities for carrying out metal-catalyzed cross-coupling reactions under non-inert reaction conditions.

In a further preferred embodiment of the present invention, a solvent is used. More preferably, the solvent is selected from acetonitrile (MeCN), dimethyl sulfoxide (DMSO), *N,N-*dimethyl formamide (DMF), toluene, 1,2-dichloroethane (DCE), or tetrahydrofuran (THF). Most preferably, acetonitrile is used as the solvent delivering high yields.

In another aspect of the present invention, polycarbonates obtainable by the process of the present invention are provided. Those polycarbonates exhibit improved properties, in particular with respect to mechanical and/or optical properties, heat resistance and/or weatherability.

The definitions/explanations given above in context of the described process can directly be transferred to the polycarbonate described before and after this passage. All mandatory or preferred/advantageous features described in relation to the process according to the invention may form mandatory or preferred/advantageous features of the polycarbonate according to the invention as well.

As mentioned before, the objects of the present invention are (at least partially) solved by a polycarbonate.

In particular, the invention relates to a polycarbonate comprising a repeating unit with a structure of formula (IIIa) 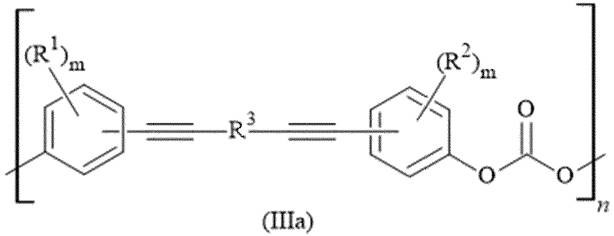 wherein the repeating unit with the structure of formula (IIIa) comprises two aromatic rings, a carbonate group -OC(=O)O- and a linking group with a structure of formula (IVa) 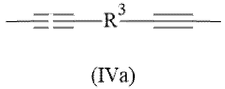 wherein one of the two aromatic rings is substituted with the carbonate group, the two aromatic rings are linked *via* the linking group, and the linking group in each repeating unit independently is either in *ortho-, meta-* or *para-*position with respect to the carbonate group,
or a repeating unit with a structure of formula (IIIb) 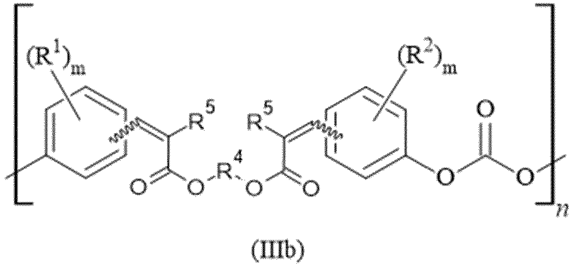 wherein the repeating unit with the structure of formula (IIIb) comprises two aromatic rings, a carbonate group -OC(=O)O- and a linking group with a structure of formula (IVb) 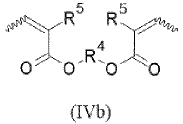 wherein one of the two aromatic rings is substituted with the carbonate group, the two aromatic rings are linked *via* the linking group and the linking group in each repeating unit independently is either in *ortho-, meta-* or *para-*position with respect to the carbonate group,
and wherein
- each m independently is 0 to 4, preferably 1 to 3,
- each R¹ and R² independently represents an R¹ substituent and an R² substituent, respectively, being capable of activating the aromatic ring which it substitutes by a mesomeric effect and/or an inductive effect,
- R³ represents
   ∘ an optionally substituted alkyl, alkenyl or alkynyl group, wherein this optionally substituted alkyl, alkenyl or alkynyl group is optionally interrupted by at least one hetero atom,
   ∘ an optionally substituted cycloalkyl or cycloalkenyl group, or
   ∘ an optionally substituted phenyl group,
- R⁴ represents
   ∘ an optionally substituted alkyl or alkenyl group,
   ∘ an optionally substituted cycloalkyl or cycloalkenyl group, or
   ∘ an optionally substituted aryl group,
- each R⁵ independently represents
   ∘ a hydrogen atom, or
   ∘ an optionally substituted alkyl or alkenyl group, wherein this optionally substituted alkyl or alkenyl group is optionally interrupted by an ester group, and
- n is the number of repeating units.

With respect to the polycarbonate, preferably, at least one R¹ substituent and/or at least one R² substituent is in *ortho-*position with respect to the carbonate group substituting the same aromatic ring. Further, with respect to the polycarbonate, preferably, each R¹ and each R² independently represents an alkyl group or an alkoxy group, preferably an alkyl or alkoxy group having 1 to 6 carbon atoms, more preferably methyl, ethyl, n-propyl, isopropyl, *n*-butyl, *sec*-butyl, *tert-*butyl, *n-*pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexyloxy, cyclopentoxy, *n*-hexyloxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy, most preferably *n*-propyl or methoxy.

With respect to the polycarbonate, preferably, R³ represents an alkyl group having 1 to 20 carbon atoms, wherein this alkyl group is optionally interrupted by at least one hetero atom, and wherein the at least one hetero atom is preferably selected from an oxygen atom or a nitrogen atom. Alternatively, with respect to the polycarbonate, preferably, R³ represents a phenyl group, or a substituted phenyl group having 6 to 12 carbon atoms in total. Further, with respect to the polycarbonate, preferably, R⁴ represents an alkyl group having 1 to 20 carbon atoms. In addition, with respect to the polycarbonate, preferably, R⁵ represents a hydrogen atom, or an alkyl group having 1 to 20 carbon atoms, wherein this alkyl group is optionally interrupted by an ester group.

With respect to the polycarbonate, preferably, the linking group in each repeating unit independently is in *meta-*position*,* with respect to the carbonate group substituting the same aromatic ring.

Further, with respect to the polycarbonate, preferably, each of the two aromatic rings in each repeating unit of formula (IIIb) independently is substituted by the linking group such that each repeating unit represents an (*E,E*)-isomer.

### Brief description of the Figures

Figure 1. Nano-electrospray mass spectrum in DMSO of inventive example 38.
Figure 2. Nano-electrospray mass spectrum in DMSO of inventive example **53.**

### Examples

The following examples are used to describe the invention. It is to be noted that sometimes reactions are studied that do not represent polymerizations, but rather study the coupling of one aromatic moiety with another aromatic moiety, wherein at least one of those moieties comprises a carbonate group. However, based on those examples (indicated as "Reference example"), the person skilled in the art can easily conclude how a polymerization reaction as such can be performed.

### General considerations and methods

Nuclear Magnetic Resonance (NMR) spectra were recorded on a Bruker Avance III 400 (101 MHz for ¹³C) Fourier Transform NMR spectrometer at 300 K (unless stated otherwise), using the non or partly deuterated solvent as internal standard (¹H: *δ* = 7.26 ppm, ¹³C: *δ* = 77.16 ppm for CDCl₃). Chemical shifts (*δ*) are given in ppm and coupling constants (*J*) are reported in Hertz (Hz). Multiplicities are described as s (singlet), d (doublet), t (triplet), q (quartet), br s (broad singlet) and m (multiplet) or combinations thereof.

High resolution mass spectrometry (HRMS) samples were prepared by dissolving 0.1-5 mg of the compound in DMSO or CH₃CN/H₂O and further diluted to a concentration of 10⁻⁵-10⁻⁶ M. Formic acid (0.1%) was added prior to injection. 10 µL of each sample was injected using the CapLC system (Waters, Manchester, UK) and electrosprayed using a standard electrospray source. Samples were injected with an interval of 3 minutes. Positive ion mode accurate mass spectra were acquired using a Q-TOF II instrument (Waters, Manchester, UK). The MS was calibrated prior to use with a 0.1% H₃PO₄ solution. The spectra were lock mass corrected using the known mass of the nearest H₃PO₄ cluster or a known background ion. Analytes were detected as protonated or as a sodium adduct. All measured masses are within a difference of 5 ppm compared to the calculated mass unless specified otherwise.

Nano-electrospray mass analysis samples were prepared by dissolving 4 mg of the obtained solid in 1 mL of DMSO. This mixture was diluted by taking 10 µL and dissolving it in 990 µL DMSO and taking 100 µL from this solution and adding 900 µL of DMSO. The measurement was done by placing 3 µL of the obtained sample in a in a gold-coated borosilicate needle (in house made). The sample was then sprayed from this needle using a nano-electrospray source (Waters). Positive ion mode accurate mass spectra were acquired using a Q-TOFII instrument (Waters, Manchester, UK).

Flash chromatography was performed either manually on SiO₂ (particle size 40-63 µm, pore diameter 60 Å) using the indicated eluent and visualized by UV detection (254 nm) or on an automated chromatography system (Biotage^{®} One Isolera Automatic Flash) with on-line UV detection using Grace^{®} Silica flash Cartridges.

Thin Layer Chromatography (TLC) was performed using TLC plates from Merck (SiO₂, Kieselgel 60 F254 neutral, on aluminum with fluorescence indicator) and compounds were visualized by UV detection (254 nm) unless mentioned otherwise.

Melting points were recorded on a Büchi M-565 melting point apparatus and are uncorrected.

Size exclusion chromatography was performed using a PSS SECcurity System; polycarbonate calibration (according to 2301-0257502-09D method of company Currenta GmbH & Co. OHG, Leverkusen), dichloromethane as eluent, column 1 (PL-PC5) with a concentration of 2 g/L, flow rate 1.0 ml/min, at a temperature of 30°C using UV and/or RI detection.

### Materials used in the examples

All solvents and commercially available reagents were used as received.

### A) Commercially available chemicals

| Chemical | CAS-number | Supplier | Purity (GC) |
|---|---|---|---|
| Triethylamine (NEt₃) | 121-44-8 | Acros Organics | 99% |
| Pyridine | 110-86-1 | Acros Organics | 99.5%, extra dry |
| Cesium carbonate (Cs₂CO₃) | 534-17-8 | Acros Organics | 99.5%, for analysis |
| Potassium phosphate (K₃PO₄) | 7778-53-2 | Fluorochem | 97%, anhydrous |
| *N,N*-dicyclohexylmethylamine (Cy₂NMe) | 7560-83-0 | Sigma-Aldrich | 97% |
| 2-Methoxyphenol | 90-05-1 | Acros Organics | 99% |
| 2-Methoxy-4-propylphenol | 2785-87-7 | Sigma-Aldrich | 99% |
| 4-Iodo-2-methoxyphenol | 203861-62-5 | Sigma-Aldrich | 97% |
| 2-Iodophenol | 533-58-4 | Sigma-Aldrich | 98% |
| 2-Bromophenol | 95-56-7 | Sigma-Aldrich | 98% |
| 4-Chlorophenol | 106-48-9 | Acros Organics | >99% |
| 4-Dimethylaminopyridine (DMAP) | 1122-58-3 | Fluorochem | 99% |
| Diphenyl carbonate | 102-09-0 | TCI | 99% |
| Guaiacol carbonate | 553-17-3 | TCI | >98% |
| 3-Bromopropyne | 106-96-7 | Acros Organics | 80 wt.% solution in toluene |
| Acryloyl chloride | 814-68-6 | Sigma-Aldrich | 97% |
| Tripropargylamine | 6921-29-5 | TCI | >98% |
| *N*-chlorosuccinimide (NCS) | 128-09-6 | Fluorochem | 97% |
| *N*-bromosuccinimide (NBS) | 128-08-5 | J&K Scientific | 97% |
| *N*-iodosuccinimide (NIS) | 516-12-1 | TCI | >99% |
| Tetrabutylammonium iodide (NBu₄I) | 311-28-4 | Acros Organics | 98% |
| Oxone | 70693-62-8 | Acros Organics | Extra pure, min. 4.5% active oxygen |
| [Bis(trifluoroacetoxy)iodo] benzene | 2712-78-9 | Fluorochem | 95% |
| Iodine | 7553-56-2 | Fisher Scientific | Extra pure |
| Ethyl acrylate | 140-88-5 | TCI | >99% |
| Dimethylitaconate | 617-52-7 | TCI | >98% |
| Phenylacetylene | 536-74-3 | TCI | >98% |
| Oct-1-yne | 629-05-0 | Acros Organics | 99% |
| Styrene | 100-42-5 | Acros Organics | 99%, stabilized |
| Iodine monochloride | 7790-99-0 | Acros Organics | 1 M in DCM |
| Sodium thiosulfate (Na₂S₂O₃) | 7772-98-7 | Acros Organics | 99%, anhydrous |
| Methyl chloroformate | 79-22-1 | Acros Organics | 99% |
| Ethylene glyclol | 107-21-1 | Acros Organics | 99.8%, anhydrous |
| Sodium hydride | 7646-69-7 | Sigma Aldrich | 90%, dry |
| 1,7-Octadiyne | 871-84-1 | TCI | >98% |
| Sodium bicarbonate (NaHCO₃) | 144-55-8 | Fisher Chemical | 99.7% |
| Ammonium chloride (NH₄Cl) | 12125-02-9 | Acros Organics | >99% |
| Magnesium sulfate (MgSO₄) | 22189-08-8 | Acros-Organics | 99%, dried |
| Hydrochloric acid (HCl) | 7647-01-0 | Fisher Chemical | analytical reagent grade (36%) |
| Sodium hydroxide (NaOH) | 1310-73-2 | Acros Organics | 98% |
| Celite | 68855-54-9 | Chem-Lab NV | not indicated |
| Sodium chloride (NaCl) | 7647-14-5 | Acros-Organics | 99.5% |
| Silica (SiO₂) | 7631-86-9 | Macherey-Nagel | particle size 40-63 µm, pore diameter 60 Å |
| Ethylenecarbonate | 96-49-1 | Sigma-Aldrich | 98% |
| Deuterated chloroform (CDCl₃) | 865-49-6 | Eurisotop | 99.8% D |
| Bis(triphenylphosphine)palladium dichloride (Pd(PPh₃)₂Cl₂) | 13965-03-2 | ABCR | 99% |
| Pd/C | 7440-05-3 | Acros Organics | 10% on carbon |
| Bis(triphenylphosphine)nickel dichloride (Ni(PPh₃)₂Cl₂) | 14264-16-5 | Sigma-Aldrich | Synthesis grade |
| CuI | 7681-65-4 | Acros Organics | 98% |
| FeBr₃ | 10031-26-2 | Sigma-Aldrich | 98% |
| FeCl₃ | 7705-08-0 | Alfa Aesar | 98% |
| 1,3-bis(2,4,6-trimethylphenyl) imidazolinium chloride | 173035-10-4 | TCI | 98% |
| Triphenylphosphine (PPh₃) | 603-35-0 | Sigma-Aldrich | 99% |
| Acetone | 67-64-1 | Fisher Chemical | 99.8%, analytical reagent grade |
| Acetonitrile (ACN, dry) | 75-05-8 | Acros Organics | 99.9%, extra dry |
| Acetonitrile (ACN) | 75-05-8 | Fisher Chemical | 99.8%, analytical reagent grade |
| Chloroform | 67-66-3 | Fisher Chemical | 99.8%, analytical reagent grade |
| Dichloromethane (dry, DCM) | 75-09-2 | Acros Organics | >99%, extra dry |
| Dichloromethane (DCM) | 75-09-2 | Fisher Chemical | 99.8%, analytical reagent grade |
| Dichloroethane (dry) | 107-06-2 | Acros Organics | 99.5%, extra dry |
| Dimethylformamide (DMF) | 68-12-2 | Acros Organics | 99.8%, extra dry |
| Dimethylsulfoxide (DMSO) | 67-68-5 | Fisher Chemical | 99.8%, analytical reagent grade |
| Dimethylsulfoxide (DMSO, dry) | 67-68-5 | Acos Organics | 99.7%, extra dry |
| Ethyl acetate (EtOAc) | 141-78-6 | Fisher Chemical | 99.8%, analytical reagent grade |
| Heptane | 64742-49-0 | Fisher Chemical | Extra pure, but distill prior to use |
| Methanol (dry, MEOH) | 67-56-1 | Acros Organics | 99.8%, extra dry |
| Methanol | 67-56-1 | Fisher Chemical | 99.8%, analytical reagent grade |
| Tetrahydrofuran (dry) | 109-99-9 | Acros Organics | 99.5%, extra dry |
| Toluene (dry) | 108-88-3 | Acros Organics | 99.9%, extra dry |
| *tert*-Butyl methyl ether (MTBE) | 1634-04-4 | Fisher Chemical | Extra Pure, SRL |

### Non-commercial chemicals

### B) Carbonates, alkynes and alkenes

### General procedure 1:

A round-bottomed flask equipped with a stir bar, was charged with the substituted phenol (1.0 equiv), triethylamine (1.2 equiv) and dichloromethane (25 mL). The mixture was cooled to 0 °C in an ice-water bath. Subsequently, methyl chloroformate (1.2 equiv) was added dropwise over a period of 10 minutes. The mixture was stirred at room temperature for the indicated time. The precipitate was filtered off over a paper filter. The filtrate was extracted with HCl (1 M, 1 x 30 mL), NaOH (0.5 M, 30 mL) and with saturated aqueous NaCl solution (1 x 30 mL). The organic layer was dried over anhydrous MgSO₄, filtered and concentrated *in vacuo.* The product was purified as indicated.

### 2-Methoxyphenyl methyl carbonate

General procedure 1 was applied using 2-methoxyphenol (1.241 g, 10.0 mmol), NEt₃ (1.7 mL, 12.0 mmol) and methyl chloroformate (980 µL, 9.6 mmol) for 2 h. The product was obtained in 80% (1.455 g) yield.

White solid, m.p.: 31-32 °C, ¹H NMR (400 MHz, CDCl₃): δ 7.28-7.24 (m, 1H), 7.19 (dd, *J* = 7.9, 1.6 Hz, 1H), 7.15 (dd, *J* = 8.3, 1.3 Hz, 1H), 6.97 (td, *J* = 7.7, 1.5 Hz, 1H), 3.81 (s, 3H), 3.79 (s, 3H) ppm. ¹³C NMR (101 MHz, CDCl₃): δ 153.3 (C), 150.9 (C), 139.5 (C), 127.3 (CH), 122.4 (CH), 120.6 (CH), 113.0 (CH), 55.8 (CH₃), 55.5 (CH₃) ppm. HRMS for C₉H₁₁O₄ [M+H]⁺ calcd. 183.0652, found 183.0653.

### Bis(2-methoxy-4-propylphenyl) carbonate

A reactor was charged with 2-methoxy-4-propylphenol (83.1 g, 0.5 mol), pyridine (79.1 g, 1.0 mol) and dichloromethane (606 mL). The temperature was maintained at 25 °C *via* a thermostatic bath, before phosgene (27.2 g, 0.28 mol) was added over a period of 15 minutes. The mixture was flushed with nitrogen for 45 minutes, before it was washed twice with an aqueous HCl solution (10%, 400 mL) and three times with H₂O (400 mL). The solvent was removed and the product dried overnight at room temperature under vacuum. The product was obtained in 99% yield (88.95 g).

White solid, m.p.: 66-67 °C, ¹H NMR (400 MHz, CDCl₃): δ 7.13 (d, *J =* 8.1 Hz, 2H), 6.81 (d, *J* = 1.7 Hz, 2H), 6.77 (dd, *J* = 8.1, 1.8 Hz, 2H), 3.89 (s, 6H), 2.75-2.21 (m, 4H), 1.75-1.60 (m, 4H), 0.96 (t, *J =* 7.3 Hz, 6H) ppm. ¹³C NMR (101 MHz, CDCl₃): δ 151.8 (C), 150.9 (C), 142.1 (C), 138.4 (C), 122.0 (CH), 120.6 (CH), 113.1 (CH), 56.2 (CH₃), 38.1 (CH₂), 24.6 (CH₂), 13.9 (CH₃) ppm. HRMS for C₂₁H₂₆O₅Na [M+Na]⁺ calcd. 381.1672, found 381.1674.

### 1,2-Bis(prop-2-yn-1-yloxy)ethane

This compound has been prepared according to a literature procedure (Org. Biomol. Chem. 2009, 7, 1680-1688).

An oven-dried round-bottomed flask equipped with a stir bar, was charged under argon atmosphere with ethylene glycol (dry, 560 µL, 10.0 mmol) and sodium hydride (1.2 g, 50.0 mmol) in DMF (dry, 10 mL) and cooled to 0 °C. Subsequently, 3-bromopropyne (3.1 mL, 28.0 mmol) was added. The mixture was stirred at 0 °C for 1 h and then 24 h at room temperature. The reaction mixture was concentrated under reduced pressure, diluted with water and extracted with MTBE (3 x 40 mL). The organic layer was extracted with saturated aqueous NaCl solution (3 x 20 mL) and subsequently dried over anhydrous MgSO₄, filtered and evaporated under reduced pressure. The product was purified by an automated flash chromatography system using a Heptane / EtOAc gradient (from 100% Heptane to 50% EtOAc in 40 min, 25 mL/min). The product was obtained in 63% (874 mg) yield.

Colorless oil, ¹H NMR (400 MHz, CDCl₃): δ 4.20 (d, *J =* 2.4 Hz, 4H), 3.72 (s, 4H), 2.42 (t, *J =* 2.4 Hz, 2H) ppm. ¹³C NMR (101 MHz, CDCl₃): δ 79.6 (C), 74.7 (C), 69.0 (CH₂), 58.5 (CH₂) ppm. HRMS for C₈H₁₀O₂Na [M+Na]⁺ calcd. 161.0573, found 161.0576.

### Ethane-1,2-diyl diacrylate

This compound has been prepared according to a literature procedure (RSC Adv., 2019, 9, 40455-40461).

An oven-dried round-bottomed flask equipped with a stir bar, was charged under argon atmosphere with ethylene glycol (dry, 560 µL, 10.0 mmol) in DCM (dry, 20 mL) and cooled to 0 °C. Subsequently, acryloyl chloride (2.4 mL, 30.0 mmol) was added. The mixture was stirred at 0 °C for 1 h and then 24 h at room temperature. The reaction mixture was filtered and the filtrate was washed with saturated aqueous solution of NaHCO₃ (3 x 30 mL). The organic layer was concentrated and dried *in vacuo.* The product was obtained in 70% (1.18 g) yield.

Yellow oil, ¹H NMR (400 MHz, CDCl₃): δ 6.44 (dd, *J =* 17.4, 1.4 Hz, 2H), 6.14 (dd, *J =* 17.3, 10.4 Hz, 2H), 5.86 (dd, *J =* 10.4, 1.4 Hz, 2H), 4.41 (s, 4H) ppm. ¹³C NMR (101 MHz, CDCl₃): δ 166.1 (C), 131.5 (CH₂), 128.1 (CH), 62.4 (CH₂) ppm. HRMS for C₈H₁₀O₄Na [M+Na]⁺ calcd. 193.0471, found 193.0464.

### C) Halogenated carbonates

### COMPARATIVE EXAMPLE 1: N-iodosuccinimide (NIS) as electrophilic reactant

An oven dried vial of 25 mL equipped with a stir bar, was charged with FeCl₃ (81 mg, 0.5 mmol) and N-iodosuccinimide (NIS, 1.687 g, 7.5 mmol) under inert atmosphere. Subsequently, 2-methoxyphenyl methyl carbonate (911 mg, 5.0 mmol) dissolved in acetonitrile (5 mL) was added. The resulting mixture was then stirred for 1 h at room temperature, before it was quenched by the addition of water (10 mL). After extraction with EtOAc (3 x 10 mL), the organic phase was washed with a saturated solution of NaCl (20 mL) and dried over anhydrous MgSO₄, filtered and evaporated to dryness *in vacuo.* The crude NMR indicates no desired 5-iodo-2-methoxyphenyl methyl carbonate formation.

### COMPARATIVE EXAMPLE 2: N-chlorosuccinimide (NCS) as electrophilic reactant

Conditions applied as described for a similar substrate in *Nature Catal.* **2020,** *3*, 107.

A vial equipped with a stir bar, was charged with 2-methoxyphenyl methyl carbonate (182 mg, 1.0 mmol), *N*-chlorosuccinimide (160 mg, 1.2 mmol) and chloroform (2 mL) under air atmosphere. Then, dimethylsulfoxide (14 µL) was added to the solution and the mixture was stirred at 30 °C overnight. The next morning, the mixture was filtered over a paper filter and evaporated to dryness *in vacuo.* No desired 5-chloro-2-methoxyphenyl methyl carbonate was formed.

### COMPARATIVE EXAMPLE 3: N-bromosuccinimide (NBS) as electrophilic reactant

Conditions applied as described for a similar substrate without carbonate moiety in *J. Braz. Chem. Soc.* **2016,** *27*, 1217.

A vial equipped with a stir bar, was charged with 2-methoxyphenyl methyl carbonate (182 mg, 1.0 mmol), *N*-bromosuccinimide (196 mg, 1.2 mmol), SiO₂ (100 mg) and DCM (2 mL) under air atmosphere. The mixture was stirred at 30 °C overnight. The next morning, the mixture was filtered over a paper filter, washed with DCM (3 x 15 mL) and evaporated to dryness *in vacuo.* No desired 5-bromo-2-methoxyphenyl methyl carbonate was formed.

### COMPARATIVE EXAMPLE 4: tetrabutylammonium iodide as electrophilic reactant

Conditions applied as described for a similar substrate without carbonate moiety in Tetrahedron Lett. 2004, 8015.

A round bottomed flask of 25 mL equipped with a stir bar, was charged with tetrabutylammonium iodide (813 mg, 2.2 mmol) and 2-methoxyphenyl methyl carbonate (364 mg, 2.0 mmol) and methanol (5 mL). Then, oxone (1.352 g, 2.2 mmol) was added and the mixture was stirred at room temperature overnight. The next morning, the mixture was filtered over a paper filter and evaporated to dryness *in vacuo.* No desired 5-iodo-2-methoxyphenyl methyl carbonate was formed.

### REFERENCE EXAMPLE 5: iodine as electrophilic reactant

Conditions applied as described for a phenolic substrate in J. Am. Chem. Soc. 2013, 135, 14012.

An oven dried vial of 100 mL equipped with a stir bar, was charged with [bis(trifluoroacetoxy)iodo]benzene (5.16 g, 12.0 mmol), iodine (3.05 g, 12.0 mmol) and DCM (dry, 20 mL) under inert atmosphere. To this vigoursly stirred solution was added 2-methoxyphenyl methyl carbonate (1.822 g, 10.0 mmol) at 0 °C. The resulting mixture was then stirred for 90 minutes at room temperature, before it was quenched by the addition of a saturated solution of aqueous sodium thiosulfate (30 mL). The mixture was separated and the water layer extracted with DCM (25 ml),. The combined organic layers were dried over anhydrous MgSO₄, filtered and evaporated to dryness *in vacuo.* The residue was purified by an automated flash chromatography system using a Heptane / EtOAc gradient (from 100% Heptane to 10% EtOAc in 60 min, 25 mL/min).

5-Iodo-2-methoxyphenyl methyl carbonate was obtained in 29% (909 mg) yield.

White solid, m.p.: 82-83 °C, ¹H NMR (400 MHz, CDCl₃): δ 7.51 (dd, *J =* 8.6, 2.1 Hz, 1H), 7.43 (d, *J =* 2.1 Hz, 1H), 6.73 (d, *J =* 8.6 Hz, 1H), 3.90 (s, 3H), 3.83 (s, 3H) ppm. ¹³C NMR (101 MHz, CDCl₃): δ 153.7 (C), 151.6 (C), 140.7 (C), 136.2 (CH), 131.4 (CH), 114.6 (CH), 81.3 (C), 56.2 (CH₃), 55.8 (CH₃) ppm. HRMS (ESI) for C₉H₁₀IO₄ [M+H]⁺ calcd 308.9618, found 308.9622.

3,5-diiodo-2-methoxyphenyl methyl carbonate was obtained as side compound in 38% (1.0 g) yield.

Off-white solid, m.p.: 126-127 °C, ¹H NMR (400 MHz, CDCl₃): δ 7.98 (d, *J =* 2.0 Hz, 1H), 7.47 (d, *J* = 2.0 Hz, 1H), 3.92 (s, 3H), 3.82 (s, 3H) ppm. ¹³C NMR (101 MHz, CDCl₃): δ 153.3 (C), 152.3 (C), 144.7 (C), 144.2 (CH), 132.6 (CH), 93.4 (C), 87.1 (C), 61.5 (CH₃), 56.2 (CH₃) ppm. HRMS (ESI) for C₉H₈I₂O₄Na [M+Na]⁺ calcd. 456.8404, found 456.8412.

### REFERENCE EXAMPLE 6: iodine monochloride as electrophilic reactant

Conditions applied as described for a similar substrate without carbonate moiety in OPRD 2003, 7, 98.

A vial of 50 mL equipped with a stir bar, was charged with iodine monochloride (357 g, 2.2 mmol) and methanol (10 mL). Subsequently, the mixture was cooled to 0 °C, before 2-methoxyphenyl methyl carbonate (364 mg, 2.0 mmol) was added. The vial was equiped with a reflux condensor and the mixture was stirred overnight under reflux. The mixture was then poored into cold aqueous sodium thiosulfate (1 M) and stirred until the red color was gone. After extraction with DCM (2 x 30 mL), the combined organic phases were dried over anhydrous MgSO₄, filtered and evaporated to dryness *in vacuo.* A complicated crude NMR is obtained, where the desired 5-iodo-2-methoxyphenyl methyl carbonate is only a trace compound.

### General procedure 2:

An oven-dried round bottomed flask equipped with a stir bar, was charged with the under inert atmosphere with the carbonate and dichloromethane (5 mL, dry), and the solution was cooled to 0 °C. Iodone monochloride (1 M in DCM) was added dropwise to this solution. The resulting mixture was then stirred for the indicated time at room temperature. The mixture was quenched with cold aqueous Na₂S₂O₃ (1 M) and stirred until the red color disappeared. The aqueous phase was extracted with dichloromethane (2 x 20 mL) and combined organic phases were dried over anhydrous MgSO₄, filtered and evaporated to dryness *in vacuo.* The purification was done as described.

### REFERENCE EXAMPLE 7 - Synthesis of 5-iodo-2-methoxyphenyl methyl carbonate

The general procedure 2 was applied using 2-methoxyphenyl methyl carbonate (3.64 g, 20 mmol), and iodine monochloride (1 M, 30 mL, 30 mmol). The mixture was stirred for 3 h. The product was purified by an automated flash chromatography system using a Heptane / EtOAc gradient (from 100% Heptane to 30% EtOAc in 30 min, 25 mL/min). 5-Iodo-2-methoxyphenyl methyl carbonate was obtained in 88% (5.44 g) yield.

White solid, m.p.: 82-83 °C, ¹H NMR (400 MHz, CDCl₃): δ 7.51 (dd, *J* = 8.6, 2.1 Hz, 1H), 7.43 (d, *J =* 2.1 Hz, 1H), 6.73 (d, *J =* 8.6 Hz, 1H), 3.90 (s, 3H), 3.83 (s, 3H) ppm. ¹³C NMR (101 MHz, CDCl₃): δ 153.7 (C), 151.6 (C), 140.7 (C), 136.2 (CH), 131.4 (CH), 114.6 (CH), 81.3 (C), 56.2 (CH₃), 55.8 (CH₃) ppm. HRMS (ESI) for C₉H₁₀IO₄ [M+H]⁺ calcd. 308.9618, found 308.9622.

### COMPARATIVE EXAMPLE 8 - Iodination of phenyl methyl carbonate

The general procedure 2 was applied using phenyl methyl carbonate (300µL, 3.0 mmol), and iodine monochloride (1 M, 3.6 mL, 3.6 mmol). The mixture was stirred for 4 h. No desired 4-iodophenyl methyl carbonate was obtained.

### COMPARATIVE EXAMPLE 9 - Iodination of diphenyl carbonate

The general procedure 2 was applied using diphenyl carbonate (857 mg, 4.0 mmol), and iodine monochloride (1 M, 8.8 mL, 8.8 mmol). The mixture was stirred for 4 h. No desired bis(4-iodophenyl) carbonate was obtained.

### REFERENCE EXAMPLE 10 - Iodination of guaiacol carbonate

The general procedure 2 was applied using guaiacol carbonate (1.371 mg, 5.0 mmol), and iodine monochloride (1 M, 12.5 mL, 12.5 mmol). The mixture was stirred overnight. The product was purified by an automated flash chromatography system using a Heptane / EtOAc gradient (from 100% Heptane to 20% EtOAc in 30 min, 25 mL/min). Bis-(5-iodo-2-methoxyphenyl) carbonate was obtained in 87% (2.3 g) yield.

White solid, m.p.: 162-163 °C, ¹H NMR (400 MHz, CDCl₃): δ 7.54-7.51 (m, 4H), 6.75 (d, *J =* 8.3 Hz, 2H), 3.87 (s, 6H) ppm. ¹³C NMR (101 MHz, CDCl₃): δ 151.5 (C), 150.6 (C), 140.8 (C), 136.4 (C), 131.3 (CH), 114.8 (CH), 81.2 (C), 56.4 (CH₃) ppm. HRMS (ESI) for C₁₅H₁₂I₂O₅Na [M+Na]⁺ calcd. 548.8666, found 548.8688.

### REFERENCE EXAMPLE 11 - Iodination of bis(2-methoxy-4-propylphenyl) carbonate

The general procedure 2 was applied using bis(2-methoxy-4-propylphenyl) carbonate (5.4 g, 15 mmol), and iodine monochloride (1 M, 34.5 mL, 34.5 mmol). The mixture was stirred overnight. The product was purified by an automated flash chromatography system using a Heptane / EtOAc gradient (from 100% Heptane to 20% EtOAc in 30 min, 25 mL/min). Bis-(5-iodo-2-methoxy-4-propylphenyl) carbonate was obtained in 90% (8.2 g) yield.

White solid, m.p.: 133-134 °C, ¹H NMR (400 MHz, CDCl₃): δ 7.60 (s, 2H), 6.84 (s, 2H), 3.87 (s, 6H), 2.72-2.58 (m, 4H), 1.65-1.59 (m, 4H), 1.01 (t, *J =* 7.3 Hz, 6H) ppm. ¹³C NMR (101 MHz, CDCl₃): δ 151.4 (C), 151.0 (C), 144.6 (C), 138.6 (C), 132.3 (CH), 113.5 (CH), 87.1 (C), 56.3 (CH₃), 42.9 (CH₂), 23.7 (CH₂), 14.0 (CH₃) ppm. HRMS (ESI) for C₂₁H₂₄I₂O₅Na [M+Na]⁺ calcd. 632.9605, found 632.9625.

### General procedure 3:

A round bottomed flask equipped with a stir bar was charged with the halogenated phenol, 4-dimethylaminopyridine and triethylamine in dichloromethane (20 mL). The reaction mixture was cooled to 0 °C, before methyl chloroformate was added. The mixture was then stirred at room temperature for the indicated time. The solution was extracted with with HCl (1 M, 1 x 30 mL), NaOH (0.5 M, 30 mL) and with saturated aqueous NaCl solution (1 x 30 mL). The combined organic layers were dried over anhydrous MgSO₄, filtered and concentrated *in vacuo.* The product was purified as indicated.

### REFERENCE EXAMPLE 12 - Synthesis of 4-iodo-2-methoxyphenyl methyl carbonate

The general procedure 3 was applied using 4-iodo-2-methoxyphenol (625 mg, 2.5 mmol), 4-dimethylaminopyridine (15 mg, 5 mol%), triethylamine (418 µL, 3.0 mmol) and methyl chloroformate (290 µL, 3.0 mmol). 4-Iodo-2-methoxyphenyl methyl carbonate was obtained without further purification in quantitative (799 mg) yield.

White solid, m.p.: 94-95 °C, ¹H NMR (400 MHz, CDCl₃): δ 7.28-7.25 (m, 2H), 6.85 (d, *J* = 8.1 Hz, 1H), 3.89 (s, 3H), 3.83 (s, 3H) ppm. ¹³C NMR (101 MHz, CDCl₃): δ 153.6 (C), 152.0 (C), 140.3 (C), 130.0 (CH), 124.2 (CH), 122.1 (CH), 90.6 (C), 56.3 (CH₃), 55.8 (CH₃) ppm. HRMS (ESI) for C₉H₁₀IO₄ [M+H]⁺ calcd. 308.9618, found 308.9622.

### REFERENCE EXAMPLE 13 - Synthesis of 2-iodophenyl methyl carbonate

The general procedure 3 was applied using 2-iodophenol (880 mg, 4.0 mmol), 4-dimethylaminopyridine (24 mg, 5 mol%), triethylamine (669 µL, 4.8 mmol) and methyl chloroformate (464 µL, 4.8 mmol). The reaction mixture has stirred for 3 h. 2-Iodophenyl methyl carbonate was obtained without further purification in 89% (988 mg) yield.

Orange oil, ¹H NMR (400 MHz, CDCl₃): δ 7.83 (dd, *J =* 7.9, 1.3 Hz, 1H), 7.39-7.35 (m, 1H), 7.20 (dd, *J* = 8.1*,* 1.4 Hz, 1H), 7.01-6.97 (m, 1H), 3.94 (s, 3H) ppm. ¹³C NMR (101 MHz, CDCl₃): δ 153.5 (C), 151.4 (C), 139.7 (CH), 129.7 (CH), 128.0 (CH), 122.7 (CH), 90.0 (C), 56.0 (CH₃) ppm. HRMS (ESI) for C₈H₇IO₃Na [M+Na]⁺ calcd. 300.9332, found 300.9329.

### REFERENCE EXAMPLE 14 - Synthesis of 2-bromophenyl methyl carbonate

The general procedure 3 was applied using 2-bromophenol (464 µL, 4.0 mmol), 4-dimethylaminopyridine (24 mg, 5 mol%), triethylamine (669 µL, 4.8 mmol) and methyl chloroformate (464 µL, 4.8 mmol). The reaction mixture has stirred for 4 h. 2-Bromophenyl methyl carbonate was obtained without further purification in quantitative (950 mg) yield.

Colorless oil, ¹H NMR (400 MHz, CDCl₃): δ 7.61 (dd, *J* = 8.0, 1.5 Hz, 1H), 7.34 (td, *J* = 8.1, 1.5 Hz, 1H), 7.23 (dd, *J =* 8.1, 1.5 Hz, 1H), 7.14 (td, *J =* 7.9, 1.5 Hz, 1H), 3.94 (s, 3H) ppm. ¹³C NMR (101 MHz, CDCl₃): δ 153.4 (C), 148.5 (C), 133.6 (CH), 128.7 (CH), 127.8 (CH), 123.4 (CH), 116.1 (C), 56.0 (CH₃) ppm. HRMS (ESI) for C₈H₈BrO₃ [M+H]⁺ calcd. 230.9651, found 230.9649.

### REFERENCE EXAMPLE 15 - Synthesis of 4-chlorophenyl methyl carbonate

The general procedure 3 was applied using 4-chlorophenol (643 mg, 5.0 mmol), 4-dimethylaminopyridine (31 mg, 5 mol%), triethylamine (836 µL, 6.0 mmol) and methyl chloroformate (580 µL, 6.0 mmol). The reaction mixture has stirred overnight. 4-Chlorophenyl methyl carbonate was obtained without further purification in quantitative (950 mg) yield.

Colorless oil, ¹H NMR (400 MHz, CDCl₃): δ 7.48-7.26 (m, 2H), 7.17-7.04 (m, 2H), 3.90 (s, 3H) ppm. ¹³C NMR (101 MHz, CDCl₃): δ 154.1 (C), 149.8 (C), 131.6 (C), 129.7 (CH), 122.5 (CH), 55.6 (CH₃) ppm.

Conclusion: The synthesis of halogenated aromatic carbonates *via* electrophilic halogenation of aromatic carbonates - i.e the aromatic ring already contains a carbonate moiety - was investigated. Electrophilic halogenation of 2-methoxyphenyl methyl carbonate with classical halogenating agents such as *N*-iodosuccinimide (example 1), N-chlorosuccinimide (example 2), *N*-bromosuccinimide (example 3), tetrabutylammonium iodide (example 4) all proved unsuccessful. Pleasingly, iodine monochloride (as solution in DCM) was able to deliver 5-iodo-2-methoxyphenyl methyl carbonate (example 7). Subsequently, symmetrical aromatic carbonates such as guaiacol carbonate (example 10) and bis(2-methoxy-4-propylphenyl) carbonate (example 11) were also succesfully iodinated *via* this approach. A +M effect, *via* a methoxy moiety proved crucial for the nucleophilicity of the aromatic carbonate as no coupling occurred for phenyl methyl carbonate and diphenyl carbonate (examples 8 and 9). To investigate the metal-catalyzed coupling of other halogenated carbonates (bromo and chloro derivatives) with alkynes and alkenes, an alternative synthesis approach of these latter was identified based on halogenated phenols and subsequent carbonate formation (examples 12-15).

### Metal-based Cross-Coupling with Alkynes

### A) Solvent evaluation

### Synthetic Procedure 4:

An oven-dried round bottomed flask equipped with a stir bar, was charged under inert atmosphere with 5-iodo-2-methoxyphenyl methyl carbonate (154 mg, 0.5 mmol), copper(I) iodide (4 mg, 4 mol%), bis(triphenylphosphine)palladium dichloride (7 mg, 2 mol%), and the indicated solvent from Table 1 (5 mL, dry). Upon stirring at room temperature, triethylamine (140 µL, 1.0 mmol) was added. The vial was sealed with a septum and the mixture was degassed by passing through a steady stream of argon for 10 minutes. Subsequently, phenylacetylene (60 µL, 0.55 mmol) was added and the reaction mixture was allowed to stir at 30 °C for 17 h under argon atmosphere. Afterwards, the mixture was diluted with a saturated aqueous NH₄Cl solution and the phases were separated. The water layer was extracted with EtOAc (3 x 10 mL). The combined organic phases were dried over anhydrous MgSO₄, filtered and evaporated to dryness *in vacuo.*

Analysis: A known amount of ethylenecarbonate was added as internal standard and everything was dissolved in CDCl₃. A ¹H NMR spectrum was recorded and signals were integrated *versus* the internal standard to determine the yield of the desired product 2-methoxy-5-(phenylethynyl)phenyl methyl carbonate.

**Table 1.**

| Example | Type | Solvent | Yield (%) |
|---|---|---|---|
| 16 | Reference | CH₃CN | 97 |
| 17 | Reference | DMSO | 95 |
| 18 | Reference | DMF | 94 |
| 19 | Reference | Toluene | 98 |

Conclusion: Four different solvents were evaluated for the coupling between 5-iodo-2-methoxyphenyl methyl carbonate and phenylacetylene and pleasingly the desired product 2-methoxy-5-(phenylethynyl)phenyl methyl carbonate was obtained in high yield in all evaluated solvents.

### B) Other catalytic systems for the coupling of halogenated carbonates with alkynes

### Synthetic Procedure 5:

An oven-dried round bottomed flask equipped with a stir bar, was charged under inert atmosphere with 5-iodo-2-methoxyphenyl methyl carbonate (154 mg, 0.5 mmol) and acetonitrile (5 mL). Subsequently, the catalyst, co-catalyst and ligand were added as indicated in Table 2. Upon stirring at room temperature, triethylamine (140 µL, 1.0 mmol) was added. The vial was sealed with a septum and the mixture was degassed by passing through a steady stream of argon for 10 minutes. Subsequently, phenylacetylene (60 µL, 0.55 mmol) was added and the reaction mixture was allowed to stir at the indicated temperature for 17 h under argon atmosphere. Afterwards, the mixture was diluted with a saturated aqueous NH₄Cl solution and the phases were separated. The water layer was extracted with EtOAc (3 x 10 mL). The combined organic phases were dried over anhydrous MgSO₄, filtered and evaporated to dryness *in vacuo.*

Analysis done as decribed in synthetic procedure 4 to determine the yield of the desired product 2-methoxy-5-(phenylethynyl)phenyl methyl carbonate.

**Table 2.**

| Example | Type | Catalyst (mmol) | Co-Catalyst (mmol) | Ligand (mmol) | Temp (°C) | Yield (%) |
|---|---|---|---|---|---|---|
| 20 | Reference | Pd(PPh₃)₂Cl₂ (0.01) | CuI (0.02) | / | 30 | 97 |
| 21 | Reference | Pd/C (0.05) | CuI (0.02) | / | 80 | 50 |
| 22 | Comparative | FeBr₃ (0.10) | CuI (0.05) | / | 30 | 0 |
| 23 | Comparative | Ni(PPh₃)₂Cl₂ (0.02) | CuI (0.05) | / | 30 | 0 |
| 24 | Comparative | / | CuI (0.10) | 1,3-bis(2,4,6-trimethylphenyl) imidazolinium chloride (0.10) | 80 | 0 |
| 25 | Reference | / | CuI (0.02) | PPh₃ (0.05) | 80 | 61 |

Conclusion: Other catalytic systems were evaluated for the coupling of 5-iodo-2-methoxyphenyl methyl carbonate with phenylacetylene. The reaction conditions in Table 2 were selected based on literature conditions for phenolic substrates, but which were not yet applied on iodinated aromatic carbonates. Besides the standard Sonogashira cross-coupling conditions (example 20), also palladium on carbon proved succesfull to obtain 2-methoxy-5-(phenylethynyl)phenyl methyl carbonate although in a lower yield (example 21). The combination of a copper-catalyst and triphenylphosphine, but in the absence of a noble metal was also succesfull to deliver the desired product (example 25).

### C) Scope evaluation

### General procedure 6:

An oven-dried round bottomed flask equipped with a stir bar, was charged under inert atmosphere with the halogenated carbonate, copper(I) iodide, bis(triphenylphosphine) palladium dichloride, and acetonitrile (5 mL). Upon stirring at room temperature, triethylamine was added. The vial was sealed with a septum and the mixture was degassed by passing through a steady stream of argon for 10 minutes. Subsequently, the alkyne was added and the reaction mixture was allowed to stir at the indicated temperature under argon atmosphere for the indicated time. Afterwards, the mixture was diluted with a saturated aqueous NH₄Cl solution and the phases were separated. The water layer was extracted with EtOAc (3 x 10 mL). The combined organic layers were dried over anhydrous MgSO₄, filtered and concentrated *in vacuo.* The crude product was purified as indicated.

### REFERENCE EXAMPLE 26 - Coupling between 5-iodo-2-methoxyphenyl methyl carbonate and phenylacetylene

The general procedure 6 was applied using 5-iodo-2-methoxyphenyl methyl carbonate (154 mg, 0.5 mmol), CuI (4 mg, 4 mol%), Pd(PPh₃)₂Cl₂ (7 mg, 2 mol%), NEt₃ (140 µL, 1.0 mmol), and phenylacetylene (62 µL, 0.6 mmol). The mixture was stirred for 4 h at room temperature. The product was purified by an automated flash chromatography system using a Heptane / EtOAc gradient (from 100% Heptane to 25% EtOAc in 40 min, 25 mL/min). 2-Methoxy-5-(phenylethynyl)phenyl methyl carbonate was obtained in 97% (138 mg) yield.

Light yellow solid, m.p.: 105-106 °C, ¹H NMR (400 MHz, CDCl₃): δ 7.51-7.49 (m, 2H), 7.43-7.39 (m, 1H), 7.37-7.31 (m, 4H), 6.94 (d, *J* = 8.5 Hz, 1H), 3.92 (s, 3H), 3.88 (s, 3H) ppm. ¹³C NMR (101 MHz, CDCl₃): δ 153.8 (C), 151.7 (C), 139.9 (C), 131.7 (CH), 130.9 (CH), 128.5 (CH), 128.3 (CH), 125.8 (CH), 123.4 (C), 116.0 (C), 112.6 (CH), 88.9 (C), 88.4 (C), 56.2 (CH₃), 55.8 (CH₃) ppm. HRMS (ESI) for C₁₇H₁₅O₄ [M+H]⁺ calcd. 283.0965, found 283.0967.

### REFERENCE EXAMPLE 27 - Coupling between 4-iodo-2-methoxyphenyl methyl carbonate and phenylacetylene

The general procedure 6 was applied using 4-iodo-2-methoxyphenyl methyl carbonate (154 mg, 0.5 mmol), CuI (4 mg, 4 mol%), Pd(PPh₃)₂Cl₂ (7 mg, 2 mol%), NEt₃ (140 µL, 1.0 mmol), and phenylacetylene (62 µL, 0.6 mmol). The mixture was stirred for 17 h at room temperature. The product was purified by an automated flash chromatography system using a Heptane / EtOAc gradient (from 100% Heptane to 25% EtOAc in 40 min, 25 mL/min). 2-Methoxy-4-(phenylethynyl)phenyl methyl carbonate was obtained in 92% (130 mg) yield.

Yellow solid, m.p.: 82-83 °C, ¹H NMR (400 MHz, CDCl₃): δ 7.55-7.52 (m, 2H), 7.37-7.37 (m, 3H), 7.15-7.10 (m, 3H), 3.91 (s, 3H), 3.88 (s, 3H) ppm. ¹³C NMR (101 MHz, CDCl₃): δ 153.8 (C), 151.1 (C), 140.4 (C), 131.8 (CH), 128.6 (CH), 128.5 (CH), 124.5 (CH), 123.1 (C), 122.6 (CH), 122.4 (C), 115.8 (CH), 89.6 (C), 88.8 (C), 56.2 (CH₃), 55.7 (CH₃) ppm. HRMS (ESI) for C₁₇H₁₅O₄ [M+H]⁺ calcd. 283.0965, found 283.0963.

### REFERENCE EXAMPLE 28 - Coupling between 2-iodophenyl methyl carbonate and phenylacetylene

The general procedure 6 was applied using 2-iodophenyl methyl carbonate (139 mg, 0.5 mmol), CuI (4 mg, 4 mol%), Pd(PPh₃)₂Cl₂ (7 mg, 2 mol%), NEt₃ (140 µL, 1.0 mmol), and phenylacetylene (62 µL, 0.6 mmol). The mixture was stirred for 17 h at 80 °C. The product was purified by an automated flash chromatography system using a Heptane / EtOAc gradient (from 100% Heptane to 25% EtOAc in 40 min, 25 mL/min). Methyl 2-(phenylethynyl)phenyl carbonate was obtained in 99% (126 mg) yield.

Yellow oil, ¹H NMR (400 MHz, CDCl₃): δ 7.58 (dd, *J =* 7.7, 1.6 Hz, 1H), 7.54-7.47 (m, 2H), 7.39-7.33 (m, 4H), 7.29-7.18 (m, 2H), 3.92 (s, 3H) ppm. ¹³C NMR (101 MHz, CDCl₃): δ 153.8 (C), 151.8 (C), 133.1 (CH), 131.8 (CH), 129.7 (CH), 128.8 (CH), 128.5 (CH), 126.3 (CH), 123.1 (C), 121.9 (CH), 117.5 (C), 95.1 (C), 83.7 (C), 55.8 (CH₃) ppm. HRMS (ESI) for C₁₆H₁₃O₃ [M+H]⁺ calcd. 253.0859, found 253.0849.

### COMPARATIVE EXAMPLE 29 - Coupling between 2-bromophenyl methyl carbonate and phenylacetylene

The general procedure 6 was applied using 2-bromophenyl methyl carbonate (116 mg, 0.5 mmol), CuI (4 mg, 4 mol%), Pd(PPh₃)₂Cl₂ (7 mg, 2 mol%), NEt₃ (140 µL, 1.0 mmol), and phenylacetylene (62 µL, 0.6 mmol). The mixture was stirred overnight at room temperature or 80 °C, but the desired methyl 2-(phenylethynyl)phenyl carbonate was not obtained.

### COMPARATIVE EXAMPLE 30 - Coupling between 4-chlorophenyl methyl carbonate and phenylacetylene

The general procedure 6 was applied using 4-chlorophenyl methyl carbonate (93 mg, 0.5 mmol), CuI (4 mg, 4 mol%), Pd(PPh₃)₂Cl₂ (7 mg, 2 mol%), NEt₃ (140 µL, 1.0 mmol), and phenylacetylene (62 µL, 0.6 mmol). The mixture was stirred overnight at 80 °C, but the desired methyl 4-(phenylethynyl)phenyl carbonate was not obtained.

### REFERENCE EXAMPLE 31 - Coupling between 3,5-diiodo-2-methoxyphenyl methyl carbonate and phenylacetylene

The general procedure 6 was applied using 3,5-diiodo-2-methoxyphenyl methyl carbonate (434 mg, 1.0 mmol), CuI (15 mg, 8 mol%), Pd(PPh₃)₂Cl₂ (28 mg, 4 mol%), NEt₃ (488 µL, 3.5 mmol), and phenylacetylene (242 µL, 2.2 mmol). The mixture was stirred for 17 h at room temperature. The product was purified by an automated flash chromatography system using a Heptane / EtOAc gradient (from 100% Heptane to 20% EtOAc in 40 min, 25 mL/min). 2-Methoxy-3,5-bis(phenylethynyl)phenyl methyl carbonate was obtained in 93% (355 mg) yield.

Light orange oil, ¹H NMR (400 MHz, CDCl₃): δ 7.56 (d, *J =* 2.1 Hz, 1H), 7.52-7.49 (m, 4H), 7.33-7.24 (m, 7H), 4.07 (s, 3H), 3.90 (s, 3H) ppm. ¹³C NMR (101 MHz, CDCl₃): δ 153.8 (C), 153.1 (C), 143.9 (C), 134.8 (CH), 131.8 (CH), 131.7 (CH), 128.9 (CH), 128.7 (CH), 128.6 (CH), 128.5 (CH), 126.0 (CH), 123.0 (C), 123.0 (C), 119.1 (C), 118.5 (C), 95.4 (C), 90.1 (C), 87.5 (C), 84.3 (C), 61.6 (CH₃), 56.0 (CH₃) ppm. HRMS (ESI) for C₂₅H₁₉O₄ [M+H]⁺ calcd. 383.1278, found 383.1281.

### REFERENCE EXAMPLE 32 - Coupling between bis(5-iodo-2-methoxyphenyl) carbonate and phenylacetylene

The general procedure 6 was applied using bis(5-iodo-2-methoxyphenyl) carbonate (263 mg, 0.5 mmol), CuI (8 mg, 8 mol%), Pd(PPh₃)₂Cl₂ (14 mg, 4 mol%), NEt₃ (280 µL, 2.0 mmol), and phenylacetylene (121 µL, 2.2 mmol). The mixture was stirred for 17 h at room temperature. The product was purified by an automated flash chromatography system using a Heptane / EtOAc gradient (from 100% Heptane to 50% EtOAc in 40 min, 25 mL/min). Bis(2-methoxy-5-(phenylethynyl)phenyl) carbonate was obtained in 68% (161 mg) yield.

Off-white solid, m.p.: 173-174 °C, ¹H NMR (400 MHz, CDCl₃): δ 7.52-7.50 (m, 4H), 7.43-7.41 (m, 4H), 7.35-7.32 (m, 6H), 6.98-6.95 (m, 2H), 3.93 (s, 6H) ppm. ¹³C NMR (101 MHz, CDCl₃): δ 151.7 (C), 151.0 (C), 140.0 (C), 131.7 (CH), 131.2 (CH), 128.5 (CH), 128.4 (CH), 125.7 (CH), 123.4 (C), 116.0 (C), 112.8 (CH), 89.0 (C), 88.4 (C), 56.4 (CH₃) ppm. HRMS (ESI) for C₃₁H₂₂O₅Na [M+Na]⁺ calcd. 497.1359, found 497.1376.

### REFERENCE EXAMPLE 33 - Coupling between bis(5-iodo-2-methoxy-4-propylphenyl) carbonate and phenylacetylene

The general procedure 6 was applied using bis(5-iodo-2-methoxy-4-propylphenyl) carbonate (305 mg, 0.5 mmol), CuI (8 mg, 8 mol%), Pd(PPh₃)₂Cl₂ (14 mg, 4 mol%), NEt₃ (280 µL, 2.0 mmol), and phenylacetylene (121 µL, 2.2 mmol). The mixture was stirred for 17 h at room temperature. The product was purified by an automated flash chromatography system using a Heptane / EtOAc gradient (from 100% Heptane to 50% EtOAc in 40 min, 25 mL/min). Bis(2-methoxy-5-(phenylethynyl)-4-propylphenyl) carbonate was obtained in 66% (185 mg) yield.

Yellow solid, m.p.: 145-147 °C, ¹H NMR (400 MHz, CDCl₃): δ 7.50 (dd, *J* = 7.7, 1.7 Hz, 4H), 7.37-7.31 (m, 8H), 6.83 (s, 2H), 3.92 (s, 6H), 2.85-2.81 (m, 4H), 1.99-1.65 (m, 4H), 1.02 (t, *J =* 7.3 Hz, 6H) ppm. ¹³C NMR (101 MHz, CDCl₃): δ 151.3 (C), 144.9 (C), 138.1 (C), 131.5 (CH), 128.5 (CH), 128.2 (CH), 125.8 (CH), 123.8 (C), 115.0 (C), 113.3 (CH), 100.1 (C), 92.2 (C), 87.6 (C), 56.3 (CH₃), 37.1 (CH₂), 24.1 (CH₂), 14.2 (CH₃). HRMS (ESI) for C₃₇H₃₄O₅Na [M+Na]⁺ calcd. 581.2298, found 581.2313.

### REFERENCE EXAMPLE 34 - Coupling between bis(5-iodo-2-methoxy-4-propylphenyl) carbonate and oct-1-yne

The general procedure 6 was applied using bis(5-iodo-2-methoxy-4-propylphenyl) carbonate (305 mg, 0.5 mmol), CuI (8 mg, 8 mol%), Pd(PPh₃)₂Cl₂ (14 mg, 4 mol%), NEt₃ (280 µL, 2.0 mmol), acetonitrile (2 mL) and oct-1-yne (176 µL, 1.2 mmol). The mixture was stirred for 20 h at 70 °C. The product was purified by an automated flash chromatography system using a Heptane / EtOAc gradient (from 100% Heptane to 50% EtOAc in 30 min, 25 mL/min). Bis(2-methoxy-5-(oct-1-yn-1-yl)-4-propylphenyl) carbonate was obtained in 59% (170 mg) yield.

Light yellow oil, ¹H NMR (400 MHz, CDCl₃): δ 7.20 (s, 2H), 6.75 (s, 2H), 3.87 (s, 6H), 2.73-2.69 (m, 4H), 2.41 (t, *J =* 6.9 Hz, 4H), 1.68-1.58 (m, 8H), 1.50-1.43 (m, 4H), 1.35-1.31 (m, 8H), 0.97 (t, *J* = 7.3 Hz, 6H), 0.91 (t, *J =* 6.9 Hz, 6H) ppm. ¹³C NMR (101 MHz, CDCl₃): δ 151.3 (C), 150.6 (C), 144.3 (C), 137.9 (C), 125.8 (CH), 116.0 (C), 113.1 (CH), 93.1 (C), 78.5 (C), 56.2 (CH₃), 37.0 (CH₂), 31.6 (CH₂), 29.0 (CH₂), 28.8 (CH₂), 24.0 (CH₂), 22.8 (CH₂), 19.7 (CH₂), 14.2 (CH₃), 14.1 (CH₃) ppm. HRMS (ESI) for C₃₇H₅₁O₅ [M+H]⁺ calcd. 575.3731, found 575.3724.

### REFERENCE EXAMPLE 35- Biscarbonate formation from 5-iodo-2-methoxyphenyl methyl carbonate and 1,7-octadiyne

The general procedure 6 was applied using 5-iodo-2-methoxyphenyl methyl carbonate (308 or 154 mg, 1.0 or 0.5 mmol), CuI (8 or 4 mg, 8 mol%), Pd(PPh₃)₂Cl₂ (14 or 7 mg, 4 mol%), NEt₃ (280 or 140 µL, 2.0 or 1.0 mmol), and 1,7-octadiyene (73 or 33 µL, 0.55 or 0.25 mmol). The mixture was stirred for 17 h at room temperature. The product was purified by an automated flash chromatography system using a Heptane / EtOAc gradient (from 100% Heptane to 100% EtOAc in 45 min, 25 mL/min). Dimethyl (octa-1,7-diyne-1,8-idyl)bis(6-methoxy-3,1-phenylene) biscarbonate was obtained in 77% (89 mg) yield. When the reaction was performed in toluene instead of acetonitrile, the desired compound was obtained in 75% (174 mg).

White solid, m.p.: 138-139 °C, ¹H NMR (400 MHz, CDCl₃): δ 7.25 (dd, *J =* 8.5, 2.0 Hz, 2H), 7.17 (d, *J* = 2.0 Hz, 2H), 6.87 (d, *J =* 8.5 Hz, 2H), 3.89 (s, 6H), 3.84 (s, 6H), 2.46-2.40 (m, 4H), 1.76-1.73 (m, 4H) ppm. ¹³C NMR (101 MHz, CDCl₃): δ 153.9 (C), 151.1 (C), 139.8 (C), 130.8 (CH), 125.8 (CH), 116.8 (C), 112.5 (CH), 89.2 (C), 79.9 (C), 56.2 (CH₃), 55.7 (CH₃), 28.0 (CH₂), 19.1 (CH₂) ppm. HRMS (ESI) for C₂₆H₂₇O₈ [M+H]⁺ calcd. 467.1700, found 467.1705.

### REFERENCE EXAMPLE 36 - Biscarbonate formation from 5-iodo-2-methoxyphenyl methyl carbonate and 1,2-bis(prop-2-yn-1-yloxy)ethane

The general procedure 6 was applied using 5-iodo-2-methoxyphenyl methyl carbonate (308 mg, 1.0 mmol), CuI (8 mg, 8 mol%), Pd(PPh₃)₂Cl₂ (14 mg, 4 mol%), NEt₃ (280 µL, 2.0 mmol), and 1,2-bis(prop-2-yn-1-yloxy)ethane (69 mg, 0.5 mmol). The mixture was stirred for 17 h at 50 °C. The product was purified by an automated flash chromatography system using a Heptane / EtOAc gradient (from 100% Heptane to 100% EtOAc in 40 min, 25 mL/min). ([(Ethane-1,2-diyl)bis(oxy)prop-1-yne-3,1-diyl]-6-methoxy-3,1-phenylene) dimethyl biscarbonate was obtained in 94% (235 mg) yield. When the reaction was performed in dichloroethane (DCE) or tetrahydrofuran (THF) a yield of respectively 50% and 16% was obtained.

Beige solid, m.p.: 78-79 °C, ¹H NMR (400 MHz, CDCl₃): δ 7.31 (dd, *J =* 8.5, 2.1 Hz, 2H), 7.22 (d, *J =* 2.0 Hz, 2H), 6.89 (d, *J =* 8.5 Hz, 2H), 4.42 (s, 4H), 3.89 (s, 6H), 3.85 (s, 6H) 3.79 (s, 4H) ppm. ¹³C NMR (101 MHz, CDCl₃): δ 135.8 (C), 151.8 (C), 139.8 (C), 131.2 (CH), 126.0 (CH), 115.3 (C), 112.5 (CH), 85.5 (C), 84.5 (C), 69.1 (CH₂), 59.3 (CH₂), 56.2 (CH₃), 55.7 (CH₃) ppm. HRMS for C₂₆H₂₆O₁₀Na [M+Na]⁺ calcd. 521.1418, found 521.1437.

### REFERENCE EXAMPLE 37 - Triscarbonate formation from 5-iodo-2-methoxyphenyl methyl carbonate and 1,2-bis(prop-2-yn-1-yloxy)ethane

The general procedure 6 was applied using 5-iodo-2-methoxyphenyl methyl carbonate (462 mg, 1.5 mmol), CuI (11 mg, 12 mol%), Pd(PPh₃)₂Cl₂ (21 mg, 6 mol%), NEt₃ (418 µL, 3.0 mmol), and tripropargylamine (71 µL, 0.5 mmol). The mixture was stirred for 17 h at room temperature. The product was purified by an automated flash chromatography system using a Heptane / EtOAc gradient (from 100% Heptane to 100% EtOAc in 40 min, 25 mL/min). Trimethyl (nitrilotris[(prop-1-yne-3,1-diyl)]-6-methoxy-3,1-phenylene) triscarbonate was obtained in 77% (258 mg) yield.

Yellow oil, ¹H NMR (400 MHz, CDCl₃): δ 7.31 (dd, *J =* 8.5, 2.0 Hz, 3H), 7.22 (d, *J =* 2.0 Hz, 3H), 6.88 (d, *J =* 8.6 Hz, 3H), 3.90 (s, 9H), 3.85 (s, 9H), 3.77 (br s, 6H) ppm. ¹³C NMR (101 MHz, CDCl₃): δ 153.8 (C), 151.6 (C), 139.8 (C), 131.2 (CH), 126.0 (CH), 115.6 (C), 112.5 (CH), 84.4 (C), 83.8 (C), 56.2 (CH₃), 55.7 (CH₃), 43.1 (CH₂) ppm. HRMS for C₃₆H₃₄NO₁₂ [M+H⁺] calcd. 672.2076, found 672.2067.

### INVENTIVE EXAMPLE 38 - Oligomerization between bis(5-iodo-2-methoxy-4-propylphenyl) carbonate and 1,7-octadiyne

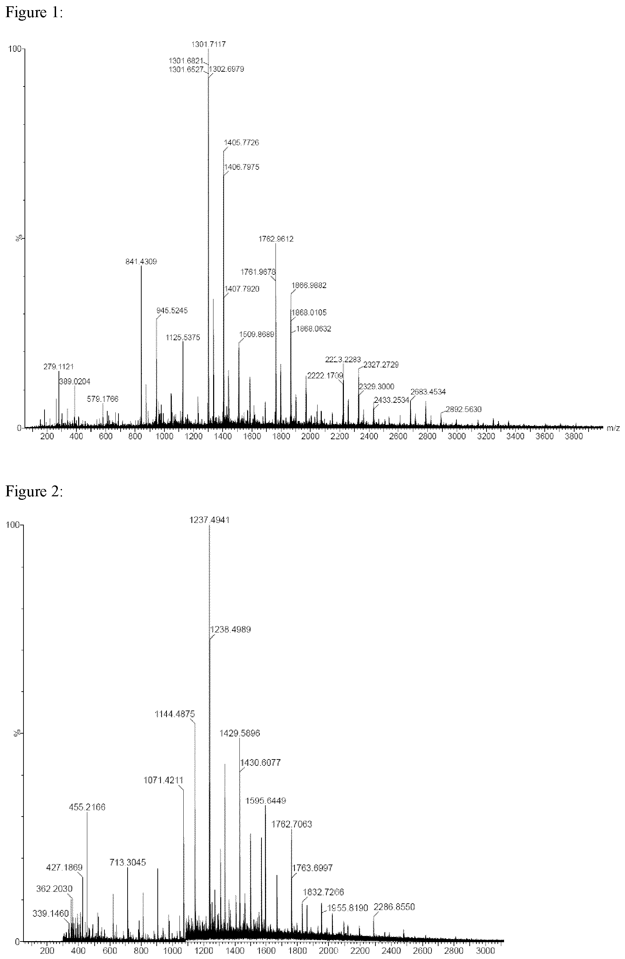

General procedure 6 was applied using bis(5-iodo-2-methoxy-4-propylphenyl) carbonate (305 mg, 0.5 mmol), CuI (8 mg, 8 mol%), Pd(PPh₃)₂Cl₂ (14 mg, 4 mol%), NEt₃ (280 µL, 2.0 mmol), 1,7-octadiyne (80 µL) and acetonitrile (2 mL). The mixture was stirred for 3 h at 70 °C. After the general workup, an sticky compound was obtained, where the formation of oligomers were proven *via* nano-mass elctrospray analysis (see Figure 1). With toluene as reaction solvent, the mixture stirred for 17 h at room temperature. After extraction the organic phase was washed with saturated aqueous NaCl solution. The combined organic layers were dried over anhydrous MgSO₄, filtered and concentrated *in vacuo.* MeOH was added and after evaporation of the solvent, an orange solid is obtained. The formation of oligomers was proven *via* nano-mass electrospray analysis (see Figure 1). Repeating unit (n) had a m/z value of 460.2, and analytes with a carbonate end group were detected as sodium adduct from 841.4 (n = 1) until 3142.5 (n = 6). Analytes with one alkyne end group were also detected as sodium adduct from 945.4 (n=1) until 3246.5 (n=6). Analytes with two alkyne end groups were also detected as sodium adduct from 1049.5 (n=1) until 3246.6 (n=6).

Conclusion: The coupling of iodinated methyl carbonates with phenylacetylene was investigated as model reaction. Pleasingly the coupling was succesfull even at room temperature when the iodine atom was in the *ortho-, meta-* and *para-*position relative to the carbonate moiety (examples 26-28). An additional substituent on the aromatic moiety, bearing a + M effect (such as a methoxy group), was beneficial for the reactivity of the aromatic carbonate as in the absence of this substituent a reaction temperature of 80 °C is required to achieve full conversion (example 28). Unfortunately no coupling was observed for the corresponding less reactive bromo- and chloro-derivatives even at elevated reaction temperature (comparative examples 29 and 30). When two iodide atoms are present at the aromatic carbonate a double coupling with phenylacetylene was succesfully achieved (example 31). Symmetrical iodinated aromatic carbonates, such as bis(5-iodo-2-methoxyphenyl) carbonate and bis(5-iodo-2-methoxy-4-propylphenyl) carbonate were also succesfully coupled with phenylacetylene, although in a slightly lower yield (examples 32 and 33). Interestingly, also unactivated aliphatic alkynes such as oct-1-yne also delivered the desired product when coupled with bis(5-iodo-2-methoxy-4-propylphenyl) carbonate, although a higher temperature (70 °C) was required as bis(5-iodo-2-methoxy-4-propylphenyl) carbonate is only poorly solube in acetonitrile at room temperature (example 34). Two biscarbonates and one triscarbonate were subsequently obtained in good to excellent yield by coupling of 5-iodo-2-methoxyphenyl methyl carbonate with either 1,7-octadiyne (example 35), 1,2-bis(prop-2-yn-1-yloxy)ethane (example 36) or propargylamine (example 37). Finally oligomerization between bis(5-iodo-2-methoxy-4-propylphenyl) carbonate and 1,7-octadiyne was successfully illustrated in example 38.

### Metal-based Cross-Coupling with Activated Alkenes

### A) Base and temperature evaluation

### Synthetic procedure 7:

An oven-dried round bottomed flask equipped with a stir bar, was charged under inert atmosphere with 5-iodo-2-methoxyphenyl methyl carbonate (154 mg, 0.5 mmol), Pd(PPh₃)₂Cl₂ (7.0 mg, 2 mol%), the indicated base of Table 3 (1.0 mmol), and acetonitrile (5 mL). The vial was sealed with a septum and the mixture was degassed by passing through a steady stream of argon for 10 minutes. Subsequently, ethyl acrylate (65 µL, 0.6 mmol) was added, the vial sealed and stirred at 70 °C for 17 h. Afterwards, the crude mixture was filtered over Celite using EtOAc (25 mL), diluted with a saturated aqueous NH₄Cl solution (15 mL) and the phases were separated. The water layer was extracted with EtOAc (3 x 10 mL). The combined organic layers were dried over anhydrous MgSO₄, filtered and concentrated *in vacuo.* A known amount of ethylenecarbonate was added as internal standard and everything was dissolved in CDCl₃. A ¹H NMR spectrum was recorded and signals were integrated versus the internal standard to determine the yield of the desired product ethyl (2E)-3-[4-methoxy-3-[(methoxycarbonyl)oxy]phenyl)prop-2-enoate.

**Table 3.**

| Example | Type | Base | Temperature (°C) | Yield (%) |
|---|---|---|---|---|
| 39 | Comparative | NEt₃ | 30 | 0 |
| 40 | Reference | NEt₃ | 70 | 85 |
| 41 | Comparative | Cs₂CO₃ | 70 | 0 |
| 42 | Comparative | K₃PO₄ | 70 | 0 |
| 43 | Reference | Cy₂NMe | 70 | 88 |
| 44 | Comparative | Pyridine | 70 | 0 |

Conclusion: From the five bases evaluated, triethylamine (example 40) and dicyclohexylmethylamine (example 43) proved succesfull for the coupling between 5-iodo-2-methoxyphenyl methyl carbonate and ethyl acrylate. A reaction temperature above 30 °C was required to achieve conversion (examples 39 and 40).

### B) Scope evaluation

### General procedure 8:

An oven-dried round bottomed flask equipped with a stir bar, was charged under inert atmosphere with the halogenated carbonate, Pd(PPh₃)₂Cl₂, and acetonitrile (5 mL). Upon stirring at room temperature, triethylamine was added. The vial was sealed with a septum and the mixture was degassed by passing through a steady stream of argon for 10 minutes. Subsequently, the alkene was added, the vial equpped with a reflux condensor and a balloon of the inert atmosphere and the reaction mixture was stirred at the indicated temperature and time. Afterwards, the mixture was diluted with a saturated aqueous NH₄Cl solution (15 mL) and the phases were separated. The water layer was extracted with EtOAc (3 x 10 mL). The combined organic layers were dried over anhydrous MgSO₄, filtered and concentrated *in vacuo.* The crude product was purified as indicated.

### REFERENCE EXAMPLE 45 - Coupling between 5-iodo-2-methoxyphenyl methyl carbonate and ethyl acrylate

The general procedure 8 was applied using 5-iodo-2-methoxyphenyl methyl carbonate (154 mg, 0.5 mmol), Pd(PPh₃)₂Cl₂ (7 mg, 2 mol%), NEt₃ (140 µL, 1.0 mmol), and ethyl acrylate (65 µL, 0.60 mmol). The mixture was stirred for 17 h at 70 °C. The product was purified by an automated flash chromatography system using a Heptane / EtOAc gradient (from 100% Heptane to 50% EtOAc in 30 min, 25 mL/min). Ethyl (2E)-3-[4-methoxy-3-[(methoxycarbonyl)oxy]phenyl)prop-2-enoate was obtained in 84% (118 mg) yield.

White solid, m.p.: 72-73 °C, ¹H NMR (400 MHz, CDCl₃): δ 7.59 (d, *J* = 16.0 Hz, 1H), 7.38 (dd,*J* = 8.5, 2.1 Hz, 1H), 7.33 (d, *J* = 2.1 Hz, 1H), 6.97 (d, *J =* 8.5 Hz, 1H), 6.29 (d, *J =* 15.9 Hz, 1H), 4.25 (q, *J =* 7.1 Hz, 2H), 3.92 (s, 3H), 3.89 (s, 3H), 1.33 (t, *J =* 7.1 Hz, 3H) ppm. ¹³C NMR (101 MHz, CDCl₃): δ 167.1 (C), 153.8 (C), 153.0 (C), 143.3 (CH), 140.5 (C), 127.9 (CH), 127.8 (C), 121.7 (CH), 117.3 (CH), 112.7 (CH), 60.6 (CH₂), 56.3 (CH₃), 55.8 (CH₃), 14.5 (CH₃) ppm. HRMS (ESI) for C₁₄H₁₆O₆Na [M+Na]⁺ calcd. 303.0839, found 303.0840.

### REFERENCE EXAMPLE 46 - Coupling between 2-iodophenyl methyl carbonate and ethyl acrylate

The general procedure 8 was applied using 2-iodophenyl methyl carbonate (139 mg, 0.5 mmol), Pd(PPh₃)₂Cl₂ (7 mg, 2 mol%), NEt₃ (140 µL, 1.0 mmol), and ethyl acrylate (65 µL, 0.60 mmol). The desired product ethyl (2*E*)-3-[2-[(methoxycarbonyl)oxy]phenyl) prop-2-enoate was only formed in trace amounts.

### COMPARATIVE EXAMPLE 47 - Coupling between 2-bromophenyl methyl carbonate and ethyl acrylate

The general procedure 8 was applied using 2-bromophenyl methyl carbonate (116 mg, 0.5 mmol), Pd(PPh₃)₂Cl₂ (7 mg, 2 mol%), NEt₃ (140 µL, 1.0 mmol), and ethyl acrylate (65 µL, 0.60 mmol). The desired product ethyl (2*E*)-3-[4-methoxy-3-[(methoxycarbonyl)oxy]phenyl) prop-2-enoate was not obtained.

### REFERENCE EXAMPLE 48 - Coupling between bis-(5-iodo-2-methoxyphenyl) carbonate and ethyl acrylate

The general procedure 8 was applied using bis-(5-iodo-2-methoxyphenyl) carbonate (526 mg, 1.0 mmol), Pd(PPh₃)₂Cl₂ (28 mg, 4 mol%), NEt₃ (558 µL, 4.0 mmol), and ethyl acrylate (240 µL, 2.2 mmol). The mixture was stirred for 17 h at 80 °C. The product was purified by an automated flash chromatography system using a Heptane / EtOAc gradient (from 100% Heptane to 50% EtOAc in 40 min, 25 mL/min). Diethyl (2*E*,2,*E*) 3,3'-[carbonylbis(oxy[4-methoxy-3,1-phenylene])]di(prop-2-enoate) was obtained in 48% (227 mg) yield.

White solid, m.p.: 121-122 °C, ¹H NMR (400 MHz, CDCl₃): δ 7.61 (d, *J =* 16.0 Hz, 2H), 7.43 (d, *J* = 2.1 Hz, 2H), 7.40 (dd, *J =* 8.5, 2.1 Hz, 2H), 7.00 (d, *J* = 8.5 Hz, 2H), 6.32 (d, *J =* 15.9 Hz, 2H), 4.26 (q, *J =* 7.1Hz, 4H), 3.94 (s, 6H), 1.33 (t, *J =* 7.1 Hz, 6H) ppm. ¹³C NMR (101 MHz, CDCl₃): δ 167.1 (C), 152.9 (C), 151.0 (C), 143.3 (CH), 140.5 (C), 128.1 (CH), 127.9 (C), 121.6 (CH), 117.4 (CH), 112.9 (CH), 60.6 (CH₂), 56.4 (CH₃), 14.5 (CH₃) ppm. HRMS (ESI) for C₂₅H₂₆O₉Na [M+Na]⁺ calcd. 493.1469, found 493.1469.

### COMPARATIVE EXAMPLE 49 - Coupling between bis-(5-iodo-2-methoxyphenyl) carbonate and styrene

The general procedure 8 was applied using bis-(5-iodo-2-methoxyphenyl) carbonate (263 mg, 0.5 mmol), Pd(PPh₃)₂Cl₂ (14 mg, 4 mol%), NEt₃ (279 µL, 2.0 mmol), and styrene (120 µL, 2.1 mmol). The desired product was not obtained.

### REFERENCE EXAMPLE 50 - Coupling between bis-(5-iodo-2-methoxy-4-propyl phenyl) carbonate and ethyl acrylate

The general procedure 8 was applied using bis-(5-iodo-2-methoxy-4-propylphenyl) carbonate (305 mg, 0.5 mmol), Pd(PPh₃)₂Cl₂ (14 mg, 4 mol%), NEt₃ (280 µL, 2.0 mmol), and ethyl acrylate (120 µL, 1.1 mmol). The mixture was stirred for 17 hours at 90 °C. The product was purified by an automated flash chromatography system using a Heptane / EtOAc gradient (from 100% Heptane to 50% EtOAc in 40 min, 25 mL/min). Diethyl (2*E*,2'*E*) 3,3'-[carbonylbis(oxy[4-methoxy-6-propyl-3,1-phenylene])]di(prop-2-enoate) was obtained in 71% (196 mg) yield. When ethyl acrylate (164 µL, 1.5 mmol) was used, the desired product was obtained in 68% (189 mg) yield. Remark: This compound was not stable in CDCl₃, NMR measured immediately after preparing the solution.

White solid, m.p.: 119-120 °C, ¹H NMR (400 MHz, CDCl₃): δ 7.90 (d, *J =* 15.8 Hz, 2H), 7.46 (s, 2H), 6.79 (s, 2H), 6.26 (d, *J =* 15.7 Hz, 2H), 4.26 (q, *J =* 7.1 Hz, 4H), 3.92 (s, 6H), 2.77-2.64 m, 4H), 1.66-1.57 (m, 4H), 1.33 (t, *J =* 7.1 Hz, 6H), 0.98 (t, *J =* 7.3 Hz, 6H) ppm. ¹³C NMR (101 MHz, CDCl₃): δ 167.3 (C), 152.4 (C), 151.4 (C), 142.5 (C), 140.9 (CH), 138.7 (C), 125.7 (C), 120.3 (CH), 118.2 (CH), 114.0 (CH), 60.6 (CH₂), 56.3 (CH₃), 35.5 (CH₂), 25.0 (CH₂), 14.5 (CH₃), 14.1 (CH₃) ppm. HRMS (ESI) for C₃₁H₃₉O₉ [M+H]⁺ calcd. 555.2589, found 555.2574.

### REFERENCE EXAMPLE 51 - Coupling between bis-(5-iodo-2-methoxyphenyl) carbonate and dimethyl itaconate

The general procedure 8 was applied using bis-(5-iodo-2-methoxyphenyl) carbonate (236 mg, 0.5 mmol), Pd(PPh₃)₂Cl₂ (14 mg, 4 mol%), NEt₃ (280 µL, 2.0 mmol), and dimethylitaconate (155 µL, 1.1 mmol). The mixture was stirred for 17 hours at 90 °C. The product was purified by an automated flash chromatography system using a Heptane / EtOAc gradient (from 100% Heptane to 50% EtOAc in 40 min, 25 mL/min). Tetramethyl (2*E*,2'*E*) 2,2'-[carbonylbis(oxy[4-methoxy-3,1-phenylene]methanylidene)]dibutanedioate was obtained in 35% (102 mg) yield.

Off-white oil, ¹H NMR (400 MHz, CDCl₃): δ 7.81 (brs, 2H), 7.28-7.26 (m, 4H), 7.02 (d, *J* = 9.1 Hz, 2H), 3.92 (s, 6H), 3.82 (s, 6H), 3.73 (s, 6H), 3.56 (s, 4H) ppm. ¹³C NMR (101 MHz, CDCl₃): δ 171.7 (C), 167.9 (C), 151.9 (C), 151.0 (C), 140.9 (CH), 140.2 (C), 128.8 (CH), 127.9 (C), 125.3 (C), 123.4 (CH), 112.9 (CH), 56.3 (CH₃), 52.4 (CH₃), 52.3 (CH₃), 33.6 (CH₂) ppm. HRMS (ESI) for C₂₉H₃₀O₁₃Na [M+Na]⁺ calcd. 609.1579, found 609.1574.

### REFERENCE EXAMPLE 52 - Biscarbonate formation from 5-iodo-2-methoxyphenyl methyl carbonate and ethane-1,2-diyl diacrylate

The general procedure 8 was applied using 5-iodo-2-methoxyphenyl methyl carbonate (308 mg, 1.0 mmol), Pd(PPh₃)₂Cl₂ (7 mg, 2 mol%), NEt₃ (280 µL, 2.0 mmol), and ethane-1,2-diyl diacrylate (85 mg, 0.5 mmol). The mixture was stirred for 17 h at 70 °C. The product was purified by an automated flash chromatography system using a Heptane / EtOAc gradient (from 100% Heptane to 50% EtOAc in 30 min, 25 mL/min). Ethane-1,2-diyl bis(3-[4-methoxy-3-((methoxycarbonyl)oxy)phenyl]prop-2-enoate was obtained in 62% (165 mg) yield.

Yellow solid, m.p.: 113-115 °C, ¹H NMR (400 MHz, CDCl₃): δ 7.63 (d, *J* = 15.9 Hz, 2H), 7.39 (dd, *J* = 8.5, 2.2 Hz, 2H), 7.34 (d, *J =* 2.1 Hz, 2H), 6.97 (d, *J =* 8.5 Hz, 2H), 6.33 (d, *J =* 16.0 Hz, 2H), 4.46 (s, 4H), 3.91 (s, 6H), 3.89 (s, 6H) ppm. ¹³C NMR (101 MHz, CDCl₃): δ 166.8 (C), 153.8 (C), 153.2 (C), 144.2 (CH), 140.5 (C), 128.1 (CH), 127.6 (C), 121.8 (CH), 116.5 (CH), 112.7 (CH), 62.5 (CH₂), 56.3 (CH₃), 55.8 (CH₃) ppm. HRMS (ESI) for C₂₆H₂₇O₁₂ [M+H]⁺ calcd. 531.1497, found 531.1510.

### INVENTIVE EXAMPLE 53 - Oligomerization with bis(5-iodo-2-methoxy-4-propylphenyl) carbonate and ethane-1,2-diyl diacrylate

General procedure 8 was applied using bis(5-iodo-2-methoxy-4-propylphenyl) carbonate (305 mg, 0.5 mmol), Pd(PPh₃)₂Cl₂ (14 mg, 0.02 mmol), NEt₃ (280 µL, 2.0 mmol), ethane-1,2-diyl diacrylate (85 µL, 0.5 mmol) and acetonitrile (2 mL). The mixture was stirred for 17 h at 80 °C. A yellow oil is obtained, which upon addition of acetone and evaporation of the solvent delivered a solid foam. The formation of small oligomers was proven *via* nano-mass electrospray analysis (see Figure 2). Repeating unit (n) had a m/z value of 524.2, with analytes detected as sodium adduct from 905.4 (n = 1) until 2477.9 (n = 4). The analytes with a phenolic end group were also detected as sodium adduct from 713.2 (n=1) until 2285.9 (n=4). Some ring-closed oligomers could also be detected as sodium adduct from 1071.4 (n=1) until 2119.8 (n=3).

Conclusion: An substituent on the aromatic moiety, bearing a + M effect (such as a methoxy group in example 45), was beneficial for the reactivity of the aromatic carbonate as in the absence of this substituent only trace amount of the envisioned product were obtained (example 46). No coupling was observed for the less reactive 2-bromophenyl methyl carbonate (example 47). Iodinated symmetrical aromatic carbonates were also successfully coupled with ethyl acrylate as illustrated for bis-(5-iodo-2-methoxyphenyl) carbonate (example 48) and bis-(5-iodo-2-methoxy-4-propylphenyl) carbonate (example 50). Styrene was not compatible (comparative example 49), but on the other hand dimethyl itaconate was successfully coupled (example 51). A biscarbonate was also successfully prepared from bis-(5-iodo-2-methoxyphenyl) carbonate and ethane-1,2-diyl diacrylate (example 52). Finally, a small oligomer formation was proven *via* a coupling of bis(5-iodo-2-methoxy-4-propylphenyl) carbonate with ethane-1,2-diyl diacrylate (example 53).

## Claims

1. A process for preparing a polycarbonate using metal-catalyzed cross-coupling, comprising a reaction of a compound with a structure of formula (I) 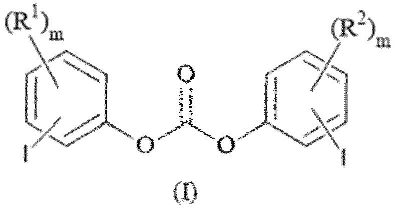 and a compound with a structure of formula (IIa) or (IIb) 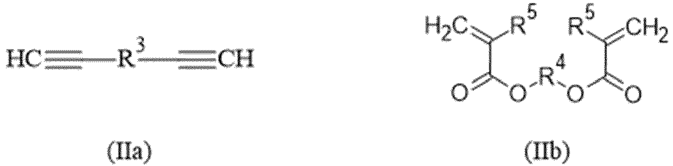 in the presence of a metal catalyst and a base, wherein
a) the reaction using compound (IIa) yields a polycarbonate comprising a repeating unit with a structure of formula (IIIa) 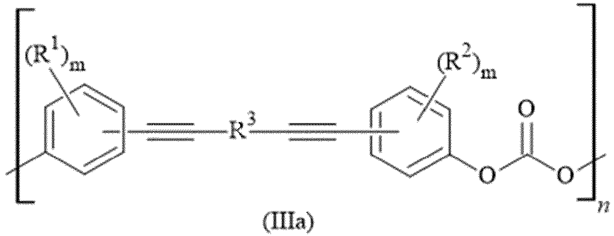 wherein the repeating unit with the structure of formula (IIIa) comprises two aromatic rings, a carbonate group -OC(=O)O- and a linking group with a structure of formula (IVa) 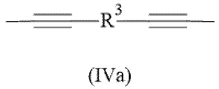 wherein one of the two aromatic rings is substituted with the carbonate group, the two aromatic rings are linked *via* the linking group, and the linking group in each repeating unit independently is either in *ortho-, meta-* or *para-position* with respect to the carbonate group,
b) the reaction using compound (IIb) yields a polycarbonate comprising a repeating unit with a structure of formula (IIIb) 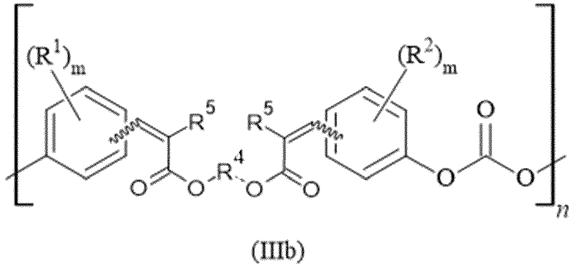 wherein the repeating unit with the structure of formula (IIIb) comprises two aromatic rings, a carbonate group -OC(=O)O- and a linking group with a structure of formula (IVb) 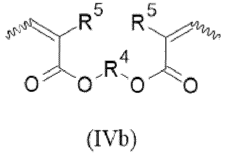 wherein one of the two aromatic rings is substituted with the carbonate group, the two aromatic rings are linked *via* the linking group and the linking group in each repeating unit independently is either in *ortho-, meta-* or *para*-position with respect to the carbonate group,
and wherein
- each m independently is 0 to 4, preferably 1 to 3,
- each R¹ and R² independently represents an R¹ substituent and an R² substituent, respectively, being capable of activating the aromatic ring which it substitutes by a mesomeric effect and/or an inductive effect,
- R³ represents
o an optionally substituted alkyl, alkenyl or alkynyl group, wherein this optionally substituted alkyl, alkenyl or alkynyl group is optionally interrupted by at least one hetero atom,
o an optionally substituted cycloalkyl or cycloalkenyl group, or
o an optionally substituted phenyl group,
- R⁴ represents
o an optionally substituted alkyl or alkenyl group,
o an optionally substituted cycloalkyl or cycloalkenyl group, or
∘ an optionally substituted aryl group,
- each R⁵ independently represents
o a hydrogen atom, or
o an optionally substituted alkyl or alkenyl group, wherein this optionally substituted alkyl or alkenyl group is optionally interrupted by an ester group, and
- n is the number of repeating units.

2. A process according to claim 1, wherein at least one R¹ substituent and/or at least one R² substituent is in *ortho*-position with respect to the carbonate group substituting the same aromatic ring.

3. A process according to one of claims 1 to 2, wherein each R¹ and each R² independently represents an alkyl group or an alkoxy group, preferably an alkyl or alkoxy group having 1 to 6 carbon atoms, more preferably methyl, ethyl, *n*-propyl, isopropyl, *n*-butyl, *sec*-butyl, *tert*-butyl, *n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy, most preferably *n*-propyl or methoxy.

4. A process according to one of claims 1 to 3, wherein
- R³ represents
o an alkyl group having 1 to 20 carbon atoms, wherein this alkyl group is optionally interrupted by at least one hetero atom, wherein the at least one hetero atom is preferably selected from an oxygen atom or a nitrogen atom, or
∘ a phenyl group, or a substituted phenyl group having 6 to 12 carbon atoms in total,
- R⁴ represents an alkyl group having 1 to 20 carbon atoms, and/or
- R⁵ represents a hydrogen atom, or an alkyl group having 1 to 20 carbon atoms, wherein this alkyl group is optionally interrupted by an ester group.

5. A process according to one of claims 1 to 4, wherein
- the linking group in each repeating unit of formula (IIIa) and/or in each repeating unit of formula (IIIb) independently is in *meta*-position, with respect to the carbonate group substituting the same aromatic ring, and/or
- each of the two aromatic rings in each repeating unit of formula (IIIb) independently is substituted by the linking group such that each repeating unit represents an (*E,E*)-isomer.

6. A process according to one of claims 1 to 5, wherein the metal catalyst is a transition metal catalyst, wherein preferably the transition metal catalyst comprises palladium and/or copper, and more preferably the transition metal catalyst is selected from
- bis(triphenylphosphine)palladium(II) dichloride [Pd(PPh₃)₂Cl₂],
- a combination of Pd(PPh₃)₂Cl₂ and copper(I) iodide (CuI),
- a combination of palladium on carbon (Pd/C) and CuI, or
- a combination of CuI and triphenylphosphine (PPh₃).

7. A process according to one of claims 1 to 6, wherein the base is an amine, preferably a tertiary amine, more preferably triethylamine (NEt₃) or *N,N*-dicyclohexylmethylamine (Cy₂NMe).

8. A process according to one of claims 1 to 7, wherein
- the compound of formula (IIa) or the compound of formula (IIb) is added in an amount of 0.1 to 10.0 equivalents, preferably 0.1 to 5.0 equivalents, more preferably 0.5 to 1.5 equivalents, with respect to the compound of formula (I), and/or
- the base is added in an amount of 2.0 to 10.0 equivalents, preferably 2.0 to 5.0 equivalents, more preferably 2.0 to 4.0 equivalents, with respect to the compound of formula (I).

9. A process according to one of claims 1 to 8, wherein
- in the reaction using the compound of formula (IIa), the metal catalyst is a combination of Pd(PPh₃)₂Cl₂ and CuI in a molar ratio of 1:2, respectively, wherein
∘ Pd(PPh₃)₂Cl₂ is added in an amount of 0.1 to 10 mol%, preferably 2 to 6 mol%, more preferably 4 mol%, with respect to the compound of formula (I), and
∘ CuI is added in an amount of 0.2 to 20 mol%, preferably 4 to 12 mol%, more preferably 8 mol%, with respect to the compound of formula (I), or
- in the reaction using the compound of formula (IIb), the metal catalyst is Pd(PPh₃)₂Cl₂, wherein Pd(PPh₃)₂Cl₂ is added in an amount of 0.1 to 5 mol%, preferably 2 to 4 mol%, more preferably 3 to 4 mol%, with respect to the compound of formula (I).

10. A process according to one of claims 1 to 9, wherein a solvent is used, preferably wherein the solvent is selected from acetonitrile (MeCN), dimethyl sulfoxide (DMSO), N,Ndimethyl formamide (DMF), toluene, 1,2-dichloroethane (DCE) or tetrahydrofuran (THF).

11. A polycarbonate comprising a repeating unit with a structure of formula (IIIa) 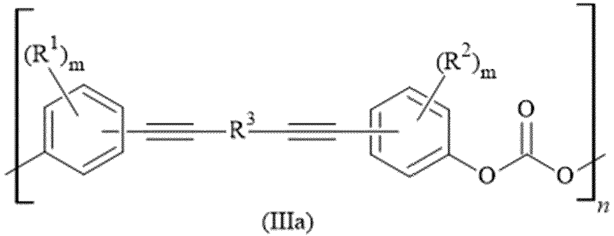 wherein the repeating unit with the structure of formula (IIIa) comprises two aromatic rings, a carbonate group -OC(=O)O- and a linking group with a structure of formula (IVa) 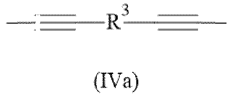 wherein one of the two aromatic rings is substituted with the carbonate group, the two aromatic rings are linked *via* the linking group, and the linking group in each repeating unit independently is either in *ortho-, meta-* or *para*-position with respect to the carbonate group,
or a repeating unit with a structure of formula (IIIb) 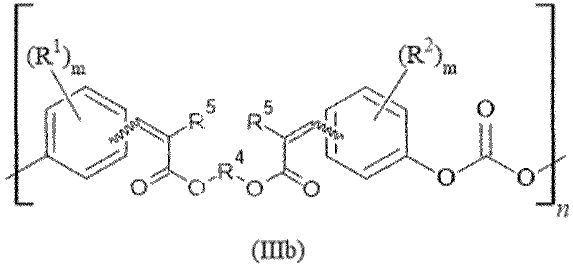 wherein the repeating unit with the structure of formula (IIIb) comprises two aromatic rings, a carbonate group -OC(=O)O- and a linking group with a structure of formula (IVb) 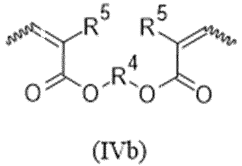 wherein one of the two aromatic rings is substituted with the carbonate group, the two aromatic rings are linked *via* the linking group and the linking group in each repeating unit independently is either in *ortho-, meta-* or *para*-position with respect to the carbonate group,
and wherein
- each m independently is 0 to 4, preferably 1 to 3,
- each R¹ and R² independently represents an R¹ substituent and an R² substituent, respectively, being capable of activating the aromatic ring which it substitutes by a mesomeric effect and/or an inductive effect,
- R³ represents
∘ an optionally substituted alkyl, alkenyl or alkynyl group, wherein this optionally substituted alkyl, alkenyl or alkynyl group is optionally interrupted by at least one hetero atom,
o an optionally substituted cycloalkyl or cycloalkenyl group, or
o an optionally substituted phenyl group,
- R⁴ represents
o an optionally substituted alkyl or alkenyl group,
o an optionally substituted cycloalkyl or cycloalkenyl group, or
∘ an optionally substituted aryl group,
- each R⁵ independently represents
o a hydrogen atom, or
o an optionally substituted alkyl or alkenyl group, wherein this optionally substituted alkyl or alkenyl group is optionally interrupted by an ester group, and
- n is the number of repeating units.

12. A polycarbonate according to claim 11. wherein at least one R¹ substituent and/or at least one R² substituent is in *ortho-*position with respect to the carbonate group substituting the same aromatic ring.

13. A polycarbonate according to one of claims 11 to 12, wherein each R¹ and each R² independently represents an alkyl group or an alkoxy group, preferably an alkyl or alkoxy group having 1 to 6 carbon atoms, more preferably methyl, ethyl, *n*-propyl, isopropyl, *n-*butyl, *sec*-butyl, *tert-*butyl, *n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexyloxy, cyclopentoxy, *n*-hexyloxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy, most preferably *n*-propyl or methoxy.

14. A polycarbonate according to one of claims 11 to 13, wherein
- R³ represents
o an alkyl group having 1 to 20 carbon atomswherein this alkyl group is optionally interrupted by at least one hetero atom, wherein the at least one hetero atom is preferably selected from an oxygen atom or a nitrogen atom, or
∘ a phenyl group, or a substituted phenyl group having 6 to 12 carbon atoms in total,
- R⁴ represents an alkyl group having 1 to 20 carbon atoms, and
- R⁵ represents a hydrogen atom, or an alkyl group having 1 to 20 carbon atoms, wherein this alkyl group is optionally interrupted by an ester group.

15. A polycarbonate according to one of claims 11 to 14, wherein
- the linking group in each repeating unit of formula (IIIa) and/or in each repeating unit of formula (IIIb) independently is in *meta*-position, with respect to the carbonate group substituting the same aromatic ring, and/or
- each of the two aromatic rings in each repeating unit of formula (IIIb) independently is substituted by the linking group such that each repeating unit represents an (E,E)-isomer.

## Patentansprüche

1. Verfahren zur Herstellung von Polycarbonat durch Metall-katalysierte Kreuz-Kupplung, enthaltend eine Reaktion einer Verbindung mit einer Struktur gemäß Formel (I) 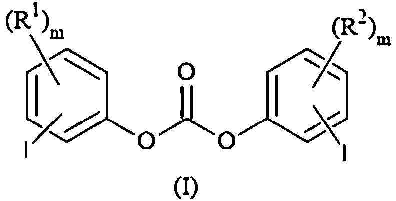 und einer Verbindung mit einer Struktur gemäß Formel (IIa) oder (IIb) 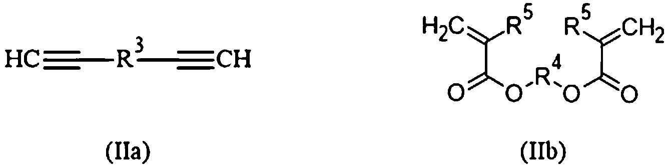 in Gegenwart eines Metallkatalysators und einer Base, worin
a) die Reaktion mit Verbindung (IIa) ein Polycarbonat ergibt, enthaltend eine Wiederholungseinheit mit einer Struktur der Formel (IIIa) 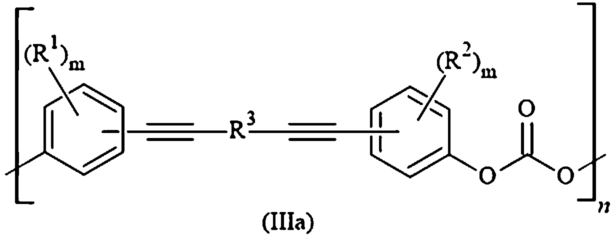 wobei die Wiederholungseinheit mit der Struktur der Formel (IIIa) zwei aromatische Ringe, eine Carbonatgruppe -OC(=O)O- und eine Verbindungsgruppe mit einer Struktur der Formel (IVa) enthält, 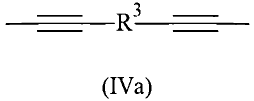 wobei einer der beiden aromatischen Ringe mit der Carbonatgruppe substituiert ist, die zwei aromatischen Ringe über die Verbindungsgruppe miteinander verknüpft sind, und die Verbindungsgruppe in jeder Wiederholungseinheit unabhängig voneinander entweder in *ortho-, meta-* oder *para*-position bezüglich der Carbonatgruppe verknüpft ist,
b) die Reaktion mit Verbindung (IIb) ein Polycarbonat ergibt, enthaltend eine Wiederholungseinheit mit einer Struktur der Formel (IIIb) 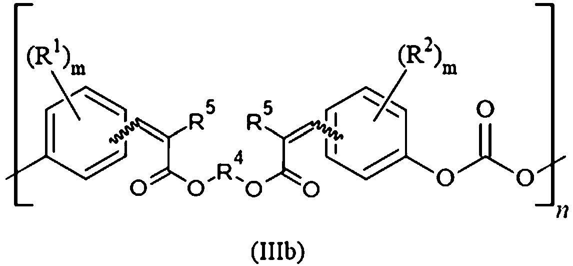 wobei die Wiederholungseinheit mit der Struktur der Formel (IIIb) zwei aromatische Ringe, eine Carbonatgruppe -OC(=O)O- und eine Verbindungsgruppe mit einer Struktur der Formel (IVb) enthält 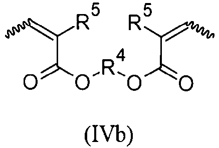 wobei einer der beiden aromatischen Ringe mit der Carbonatgruppe substituiert ist, die zwei aromatischen Ringe über die Verbindungsgruppe miteinander verknüpft sind, und die Verbindungsgruppe in jeder Wiederholungseinheit unabhängig voneinander entweder in *ortho-, meta-* oder *para*-position bezüglich der Carbonatgruppe verknüpft ist,
und wobei
- jedes m ist unabhängig von 0 bis 4, vorzugsweise 1 bis 3,
- jeweils R¹ und R² repräsentieren unabhängig voneinander einen R¹-Substituenten bzw. einen R²-Substituenten und sind jeweils in der Lage, den mit ihnen substituierten aromatischen Ring durch einen mesomeren und/oder induktiven Effekt zu aktivieren,
- R³ bedeutet
o eine optional substituierte Alkyl-, Alkenyl- oder Alkinylgruppe, bei der diese optional ersetzte Alkyl-, Alkenyl- oder Alkinylgruppe optional von mindestens einem Heteroatom unterbrochen wird,
o eine optional substituierte Cycloalkyl- oder Cycloalkenylgruppe, oder
o eine optional substituierte Phenylgruppe,
- R⁴ bedeutet
o eine optional substituierte Alkyl- oder Alkenylgruppe,
o eine optional substituierte Cycloalkyl- oder Cycloalkenylgruppe, oder
o Eine optional substituierte Aryl-Gruppe,
- jedes R⁵ bedeutet unabhängig voneinander
o ein Wasserstoffatom, oder
o eine optional substituierte Alkyl- oder Alkenylgruppe, bei der diese optional substituierte Alkyl- oder Alkenylgruppe optional durch eine Estergruppe unterbrochen wird, und
- n ist die Anzahl der Wiederholungseinheiten.

2. Verfahren gemäß Anspruch 1, worin mindestens ein Substituent R¹ und/oder mindestens ein Substituent R² in *ortho*-Position bezüglich der Carbonatgruppe ist, die am selben aromatischen Ring substituiert ist.

3. Verfahren gemäß einem der Ansprüche 1 bis 2, worin jedes R¹ und jedes R² unabhängig voneinander steht für eine Alkylgruppe oder eine Alkoxygruppe, bevorzugt eine Alkyl oder eine Alkoxygruppe mit 1 bis 6 Kohlenstoffatomen, weiter bevorzugt Methyl, Ethyl, *n*-Propyl, Isopropyl, *n*-Butyl, *sec*-Butyl, *tert*-Butyl, *n*-Pentyl, 1-Methylbutyl, 2-Methylbutyl, 3-Methylbutyl, Neopentyl, 1-Ethylpropyl, Cyclohexyl, Cyclopentyl, *n*-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, *n*-Propoxy, Isopropoxy, *n*-Butoxy, *sec*-Butoxy, *tert-*Butoxy, *n*-Pentoxy, 1-Methylbutoxy, 2-Methylbutoxy, 3-Methylbutoxy, Neopentoxy, 1-Ethylpropoxy, Cyclohexoxy, Cyclopentoxy, *n*-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, am meisten bevorzugt n-Propyl oder Methoxy.

4. Verfahren nach einem der Ansprüche 1 bis 3, worin
- R³ bedeutet
o eine Alkylgruppe mit 1 bis 20 Kohlenstoffatomen, wobei diese Alkylgruppe optional von mindestens einem Heteroatom unterbrochen wird, wobei das mindestens eine Heteroatom vorzugsweise aus einem Sauerstoffatom oder einem Stickstoffatom ausgewählt wird, oder
o eine Phenylgruppe oder eine substituierte Phenylgruppe mit insgesamt 6 bis 12 Kohlenstoffatomen,
- R⁴ bedeutet eine Alkylgruppe, die 1 bis 20 Kohlenstoffatome enthält, und/oder
- R⁵ bedeutet ein Wasserstoffatom oder eine Alkylgruppe mit 1 bis 20 Kohlenstoffatomen, wobei diese Alkylgruppe optional von einer Estergruppe unterbrochen wird.

5. Verfahren gemäß einem der Ansprüche 1 bis 4, worin
- die Verknüpfungsgruppe in jeder Wiederholungseinheit der Formel (IIIa) und/oder in jeder Wiederholungseinheit (IIIb) unabhängig voneinander in meta-Position bezüglich der Carbonatgruppe ist, die am selben aromatischen Ring substituiert ist, und/oder
- jeder der beiden aromatischen Ringe in jeder Wiederholungseinheit der Formel (IIIb) unabhängig durch die Verknüpfungsgruppe ersetzt wird, sodass jede Wiederholungseinheit ein (*E,E*)-Isomer darstellt.

6. Verfahren gemäß einem der Ansprüche 1 bis 5, worin der Metallkatalysator ein Übergangsmetallkatalysator ist, wobei vorzugsweise der Übergangsmetallkatalysator Palladium und/oder Kupfer enthält und besonders bevorzugt der Übergangsmetallkatalysator ausgewählt wird aus.
- Bis(triphenylphosphine)palladium(II) dichlorid [Pd(PPh₃)₂Cl₂],
- einer Kombination von Pd(PPh₃)₂Cl₂ und Kupfer(I)iodid (CuI),
- einer Kombination von Palladium auf Kohlenstoff (Pd/C) und CuI, oder
- einer Kombination von CuI and Triphenylphosphin (PPh₃).

7. Verfahren gemäß einem der Ansprüche 1 bis 6, worin die Base ein Amin, bevorzugt ein tertiäres Amin, besonders bevorzugt Triethylamin (NEt₃) oder *N,N*-Dicyclohexylmethylamin (Cy₂NMe).

8. Verfahren gemäß einem der Ansprüche 1 bis 7, worin
- die Verbindung der Formel (IIa) oder die Verbindung der Formel (IIb) in einer Menge von 0,1 bis 10,0 Äquivalenten hinzugefügt wird, vorzugsweise 0,1 bis 5,0 Äquivalente, weiter bevorzugt 0,5 bis 1,5 Äquivalente, bezüglich der Verbindung der Formel (I), und/oder
- die Base in einer Menge von 2,0 bis 10,0 Äquivalenten hinzugefügt wird, vorzugsweise 2,0 bis 5,0 Äquivalente, weiter bevorzugt 2,0 bis 4,0 Äquivalente, bezüglich der Verbindung der Formel (I).

9. Verfahren gemäß einem der Ansprüche 1 bis 8, worin
- in der Reaktion mit der Verbindung der Formel (IIa) der Metallkatalysator eine Kombination aus Pd(PPh₃)₂Cl₂ und CuI im molaren Verhältnis von 1:2 ist, wobei
o Pd(PPh₃)₂Cl₂ in einer Menge von 0.1 bis 10 mol%, bevorzugt 2 bis 6 mol%, bevorzugter 4 mol%, bezüglich der Verbindung der Formel (I) zugefügt wird, und
o CuI in einer Menge von 0,2 bis 20 Mol zugesetzt wird, vorzugsweise 4 bis 12 Mol %, bevorzugter 8 Mol, bezüglich der Verbindung der Formel (I), oder
- in der Reaktion mit der Verbindung der Formel (IIb) der Metallkatalysator Pd(PPh₃)₂Cl, ist, wobei Pd(PPh₃)₂Cl₂ in einer Menge von 0,1 bis 5 Mol % zugesetzt wird, vorzugsweise 2 bis 4 Mol %, bevorzugter 3 bis 4 Mol, in Bezug auf die Verbindung der Formel (I).

10. Verfahren gemäß einem der Ansprüche 1 bis 9, worin ein Lösungsmittel eingesetzt wird, bevorzugt worin das Lösemittel ausgewählt wird aus Acetonitril (MeCN), Dimethylsulfoxide (DMSO), *N,N*-Dimethylformamid (DMF), Toluol, 1,2-Dichloroethan (DCE) oder Tetrahydrofuran (THF).

11. Polycarbonat, enthaltend eine Wiederholungseinheit der Formel (IIIa) 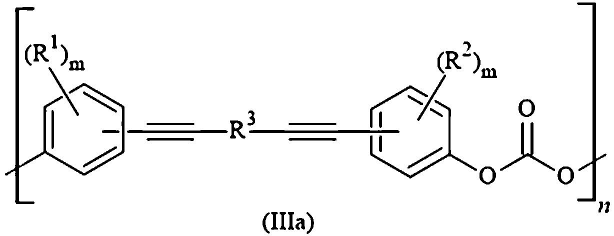 wobei die Wiederholungseinheit mit der Struktur der Formel (IIIa) zwei aromatische Ringe, eine Carbonatgruppe -OC(=O)O- und eine Verbindungsgruppe mit einer Struktur der Formel (IVa) enthält, 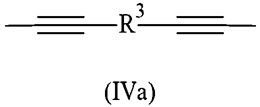 wobei einer der beiden aromatischen Ringe mit der Carbonatgruppe substituiert ist, die zwei aromatischen Ringe über die Verbindungsgruppe miteinander verknüpft sind, und die Verbindungsgruppe in jeder Wiederholungseinheit unabhängig voneinander entweder in *ortho-, meta-* oder *para*-position bezüglich der Carbonatgruppe verknüpft ist,
oder eine Wiederholungseinheit der Formel (IIIb) 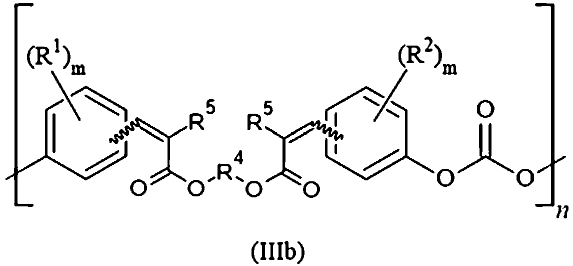 wobei die Wiederholungseinheit mit der Struktur der Formel (IIIb) zwei aromatische Ringe, eine Carbonatgruppe -OC(=O)O- und eine Verbindungsgruppe mit einer Struktur der Formel (IVb) enthält 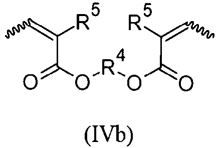 wobei einer der beiden aromatischen Ringe mit der Carbonatgruppe substituiert ist, die zwei aromatischen Ringe über die Verbindungsgruppe miteinander verknüpft sind, und die Verbindungsgruppe in jeder Wiederholungseinheit unabhängig voneinander entweder in *ortho-, meta-* oder *para*-position bezüglich der Carbonatgruppe verknüpft ist,
und wobei
- jedes m ist unabhängig von 0 bis 4, vorzugsweise 1 bis 3,
- jeweils R¹ und R² repräsentieren unabhängig voneinander einen R¹-Substituenten bzw. einen R²-Substituenten und sind jeweils in der Lage, den mit ihnen substituierten aromatischen Ring durch einen mesomeren und/oder induktiven Effekt zu aktivieren,
- R³ bedeutet
o eine optional substituierte Alkyl-, Alkenyl- oder Alkinylgruppe, bei der diese optional ersetzte Alkyl-, Alkenyl- oder Alkinylgruppe optional von mindestens einem Heteroatom unterbrochen wird,
o eine optional substituierte Cycloalkyl- oder Cycloalkenylgruppe, oder
∘ eine optional substituierte Phenylgruppe,
- R⁴ bedeutet
o eine optional substituierte Alkyl- oder Alkenylgruppe,
o eine optional substituierte Cycloalkyl- oder Cycloalkenylgruppe, oder
o Eine optional substituierte Aryl-Gruppe,
- jedes R⁵ bedeutet unabhängig voneinander
o ein Wasserstoffatom, oder
o eine optional substituierte Alkyl- oder Alkenylgruppe, bei der diese optional substituierte Alkyl- oder Alkenylgruppe optional durch eine Estergruppe unterbrochen wird, und
- n ist die Anzahl der Wiederholungseinheiten.

12. Polycarbonat gemäß Anspruch 11, worin mindestens ein Substituent R¹ und/oder mindestens ein Substituent R² in *ortho*-Position bezüglich der Carbonatgruppe ist, die am selben aromatischen Ring substituiert ist.

13. Polycarbonat gemäß einem der Ansprüche 11 oder 12, worin jedes R¹ und jedes R² unabhängig voneinander steht für eine Alkylgruppe oder eine Alkoxygruppe, bevorzugt eine Alkyl oder eine Alkoxygruppe mit 1 bis 6 Kohlenstoffatomen, weiter bevorzugt Methyl, Ethyl, *n*-Propyl, Isopropyl, *n*-Butyl, *sec*-Butyl, *tert*-Butyl, *n*-Pentyl, 1-Methylbutyl, 2-Methylbutyl, 3-Methylbutyl, Neopentyl, 1-Ethylpropyl, Cyclohexyl, Cyclopentyl, *n*-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, *n*-Propoxy, Isopropoxy, *n*-Butoxy, *sec*-Butoxy, *tert-*Butoxy, *n*-Pentoxy, 1-Methylbutoxy, 2-Methylbutoxy, 3-Methylbutoxy, Neopentoxy, 1-Ethylpropoxy, Cyclohexoxy, Cyclopentoxy, *n*-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, am meisten bevorzugt *n*-Propyl oder Methoxy.

14. Polycarbonat gemäß einem der Ansprüche 11 bis 13, worin
- R³ bedeutet
o eine Alkylgruppe mit 1 bis 20 Kohlenstoffatomen, wobei diese Alkylgruppe optional von mindestens einem Heteroatom unterbrochen wird, wobei das mindestens eine Heteroatom vorzugsweise aus einem Sauerstoffatom oder einem Stickstoffatom ausgewählt wird, oder
o eine Phenylgruppe oder eine substituierte Phenylgruppe mit insgesamt 6 bis 12 Kohlenstoffatomen,
- R⁴ bedeutet eine Alkylgruppe, die 1 bis 20 Kohlenstoffatome enthält, und/oder
- R⁵ bedeutet ein Wasserstoffatom oder eine Alkylgruppe mit 1 bis 20 Kohlenstoffatomen, wobei diese Alkylgruppe optional von einer Estergruppe unterbrochen wird.

15. Polycarbonat gemäß einem der Ansprüche 11 bis 14, worin
- die Verknüpfungsgruppe in jeder Wiederholungseinheit der Formel (IIIa) und/oder in jeder Wiederholungseinheit (IIIb) unabhängig voneinander in meta-Position bezüglich der Carbonatgruppe ist, die am selben aromatischen Ring substituiert ist, und/oder
- jeder der beiden aromatischen Ringe in jeder Wiederholungseinheit der Formel (IIIb) unabhängig durch die Verknüpfungsgruppe ersetzt wird, sodass jede Wiederholungseinheit ein *(E,E)*-Isomer darstellt.

## Revendications

1. Procédé de fabrication de polycarbonate par couplage croisé catalysé par un métal, comprenant une réaction d'un composé ayant une structure selon la formule (I) 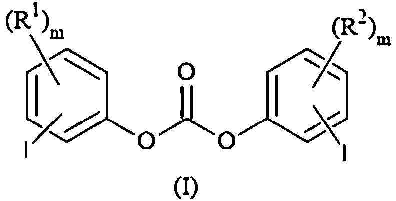 et d'un composé ayant une structure selon la formule (IIa) ou (IIb) 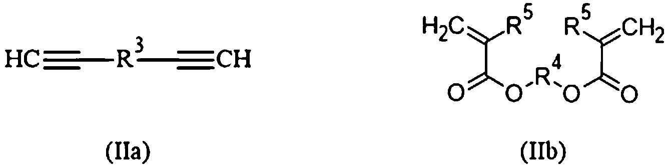 en présence d'un catalyseur métallique et d'une base, dans lequel
a) la réaction avec le composé (IIa) donne un polycarbonate contenant une unité de répétition ayant une structure de formule (IIIa) 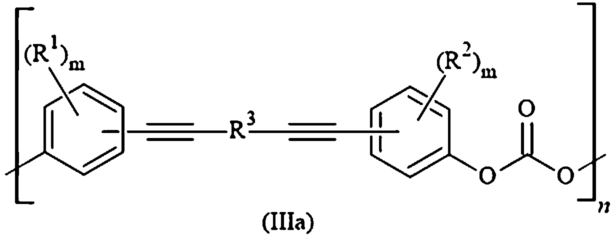 dans lequel l'unité de répétition ayant la structure de formule (IIIa) contient deux cycles aromatiques, un groupe carbonate -OC(=O)O- et un groupe de liaison ayant une structure de formule (IVa), 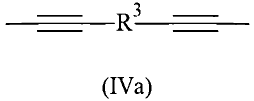 dans lequel l'un des deux cycles aromatiques est substitué par le groupe carbonate, les deux cycles aromatiques sont liés entre eux par le groupe de liaison, et le groupe de liaison dans chaque unité de répétition est lié indépendamment soit en position ortho-, méta- ou para- par rapport au groupe carbonate,
b) la réaction avec le composé (IIb) donne un polycarbonate contenant une unité de répétition ayant une structure de formule (IIIb) 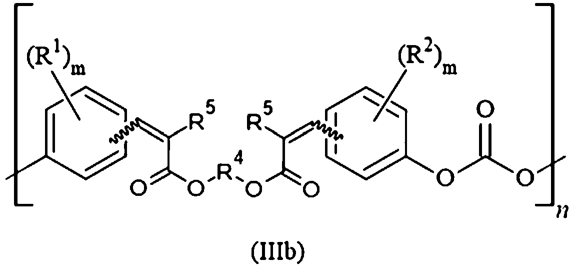 dans lequel l'unité de répétition ayant la structure de formule (IIIb) contient deux cycles aromatiques, un groupe carbonate -OC(=O)O- et un groupe de liaison ayant une structure de formule (IVb) 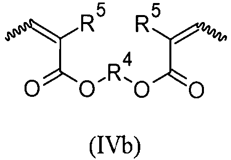 dans lequel l'un des deux cycles aromatiques est substitué par le groupe carbonate, les deux cycles aromatiques sont liés entre eux par le groupe de liaison, et le groupe de liaison dans chaque unité de répétition est lié indépendamment soit en position *ortho-, méta-* ou *para-* par rapport au groupe carbonate,
et dans lequel
- chaque m est indépendamment de 0 à 4, de préférence de 1 à 3,
- respectivement R¹ et R² représentent indépendamment un substituant R¹ ou un substituant R² et sont chacun capables d'activer le cycle aromatique substitué par eux par un effet mésomère et/ou inductif,
- R³ signifie
o un groupe alkyle, alcényle ou alcynyle optionnellement substitué, dans lequel ce groupe alkyle, alcényle ou alcynyle optionnellement substitué est optionnellement interrompu par au moins un hétéroatome,
∘ un groupe cycloalkyle ou cycloalcényle optionnellement substitué, ou
o un groupe phényle optionnellement substitué,
- R⁴ signifie
o un groupe alkyle ou alcényle optionnellement substitué,
o un groupe cycloalkyle ou cycloalcényle optionnellement substitué, ou
o un groupe aryle optionnellement substitué,
- chaques R⁵ signifie indépendamment
o un atome d'hydrogène, ou
o un groupe alkyle ou alcényle optionnellement substitué, dans lequel ce groupe alkyle ou alcényle optionnellement substitué est optionnellement interrompu par un groupe ester, et
- n est le nombre d'unités de répétition.

2. Procédé selon la revendication 1, dans lequel au moins un substituant R¹ et/ou au moins un substituant R² est en position *ortho* par rapport au groupe carbonate qui est substitué sur le même cycle aromatique.

3. Procédé selon l'une des revendications 1 à 2, dans lequel chaque R¹ et chaque R² représentent indépendamment un groupe alkyle ou un groupe alcoxy, de préférence un groupe alkyle ou un groupe alcoxy ayant 1 à 6 atomes de carbone, plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy, le plus préférablement n-propyle ou méthoxy.

4. Procédé selon l'une des revendications 1 à 3, dans lequel
- R³ signifie
∘ un groupe alkyle ayant 1 à 20 atomes de carbone, ce groupe alkyle étant optionnellement interrompu par au moins un hétéroatome, l'au moins un hétéroatome étant de préférence choisi parmi un atome d'oxygène ou un atome d'azote, ou
∘ un groupe phényle ou un groupe phényle substitué ayant au total 6 à 12 atomes de carbone,
- R⁴ signifie un groupe alkyle contenant 1 à 20 atomes de carbone, et/ou
- R⁵ signifie un atome d'hydrogène ou un groupe alkyle ayant 1 à 20 atomes de carbone, ce groupe alkyle étant optionnellement interrompu par un groupe ester.

5. Procédé selon l'une des revendications 1 à 4, dans lequel
- le groupe de liaison dans chaque unité de répétition de formule (IIIa) et/ou dans chaque unité de répétition (IIIb) est indépendamment en position méta par rapport au groupe carbonate qui est substitué sur le même cycle aromatique, et/ou
- chacun des deux cycles aromatiques dans chaque unité de répétition de formule (IIIb) est indépendamment remplacé par le groupe de liaison, de sorte que chaque unité de répétition représente un isomère (E,E).

6. Procédé selon l'une des revendications 1 à 5, dans lequel le catalyseur métallique est un catalyseur de métal de transition, le catalyseur de métal de transition contenant de préférence du palladium et/ou du cuivre et plus préférablement le catalyseur de métal de transition étant choisi parmi :
- dichlorure de bis(triphénylphosphine)palladium(II) [Pd(PPh₃)₂Cl₂],
- une combinaison de Pd(PPh₃)₂Cl₂ et d'iodure de cuivre(I) (CuI),
- une combinaison de palladium sur carbone (Pd/C) et de CuI, ou
- une combinaison de CuI et de triphénylphosphine (PPh₃).

7. Procédé selon l'une des revendications 1 à 6, dans lequel la base est une amine, de préférence une amine tertiaire, particulièrement de préférence la triéthylamine (NEt₃) ou la N,N-dicyclohexylméthylamine (Cy₂NMe).

8. Procédé selon l'une des revendications 1 à 7, dans lequel
- le composé de formule (IIa) ou le composé de formule (IIb) est ajouté en une quantité de 0,1 à 10,0 équivalents, de préférence 0,1 à 5,0 équivalents, plus préférablement 0,5 à 1,5 équivalents, par rapport au composé de formule (I), et/ou
- la base est ajoutée en une quantité de 2,0 à 10,0 équivalents, de préférence 2,0 à 5,0 équivalents, plus préférablement 2,0 à 4,0 équivalents, par rapport au composé de formule (I).

9. Procédé selon l'une des revendications 1 à 7, dans lequel
- dans la réaction avec le composé de formule (IIa), le catalyseur métallique est une combinaison de Pd(PPh₃)₂Cl₂ et de CuI dans un rapport molaire de 1:2, dans lequel
o Pd(PPh₃)₂Cl₂ est ajouté en une quantité de 0,1 à 10 mol%, de préférence 2 à 6 mol%, plus préférablement 4 mol%, par rapport au composé de formule (I), et
o CuI est ajouté en une quantité de 0,2 à 20 mol%, de préférence 4 à 12 mol%, plus préférablement 8 mol%, par rapport au composé de formule (I), ou
- dans la réaction avec le composé de formule (IIb), le catalyseur métallique est Pd(PPh₃)₂Cl₂, Pd(PPh₃)₂Cl₂ étant ajouté en une quantité de 0,1 à 5 mol%, de préférence 2 à 4 mol%, plus préférablement 3 à 4 mol%, par rapport au composé de formule (I).

10. Procédé selon l'une des revendications 1 à 9, dans lequel un solvant est utilisé, de préférence le solvant étant choisi parmi l'acétonitrile (MeCN), le diméthylsulfoxyde (DMSO), le N,N-diméthylformamide (DMF), le toluène, le 1,2-dichloroéthane (DCE) ou le tétrahydrofurane (THF).

11. Polycarbonate, contenant une unité de répétition ayant une structure de formule (IIIa) 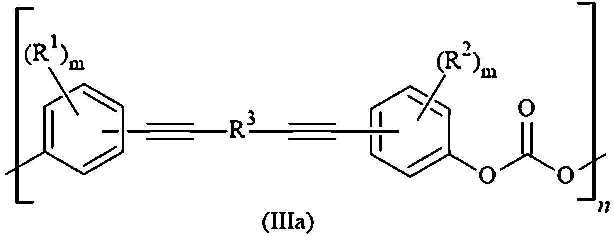 dans lequel l'unité de répétition ayant la structure de formule (IIIa) contient deux cycles aromatiques, un groupe carbonate -OC(=O)O- et un groupe de liaison ayant une structure de formule (IVa), 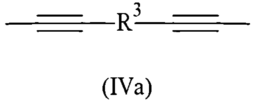 dans lequel l'un des deux cycles aromatiques est substitué par le groupe carbonate, les deux cycles aromatiques sont liés entre eux par le groupe de liaison, et le groupe de liaison dans chaque unité de répétition est lié indépendamment soit en position ortho-, méta- ou para-par rapport au groupe carbonate,
ou une unité de répétition ayant une structure de formule (IIIb) 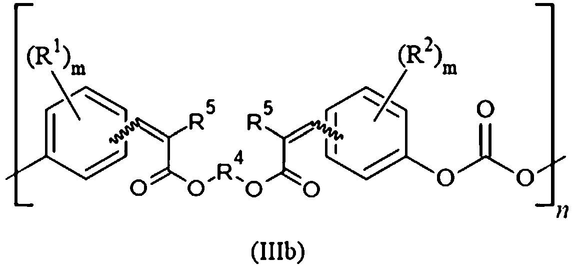 dans lequel l'unité de répétition ayant la structure de formule (IIIb) contient deux cycles aromatiques, un groupe carbonate -OC(=O)O- et un groupe de liaison ayant une structure de formule (IVb) 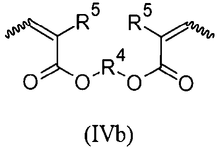 dans lequel l'un des deux cycles aromatiques est substitué par le groupe carbonate, les deux cycles aromatiques sont liés entre eux par le groupe de liaison, et le groupe de liaison dans chaque unité de répétition est lié indépendamment soit en position *ortho-, méta-* ou *para-* par rapport au groupe carbonate,
et dans lequel
- chaque m est indépendamment de 0 à 4, de préférence de 1 à 3,
- respectivement R¹ et R² représentent indépendamment un substituant R¹ ou un substituant R² et sont chacun capables d'activer le cycle aromatique substitué par eux par un effet mésomère et/ou inductif,
- R³ signifie
o un groupe alkyle, alcényle ou alcynyle optionnellement substitué, dans lequel ce groupe alkyle, alcényle ou alcynyle optionnellement substitué est optionnellement interrompu par au moins un hétéroatome,
o un groupe cycloalkyle ou cycloalcényle optionnellement substitué, ou
o un groupe phényle optionnellement substitué,
- R⁴ signifie
∘ un groupe alkyle ou alcényle optionnellement substitué,
o un groupe cycloalkyle ou cycloalcényle optionnellement substitué, ou
∘ un groupe aryle optionnellement substitué,
- chaques R⁵ signifie indépendamment
o un atome d'hydrogène, ou
o un groupe alkyle ou alcényle optionnellement substitué, dans lequel ce groupe alkyle ou alcényle optionnellement substitué est optionnellement interrompu par un groupe ester, et
- n est le nombre d'unités de répétition.

12. Polycarbonate selon la revendication 11, dans lequel au moins un substituant R¹ et/ou au moins un substituant R² est en position *ortho* par rapport au groupe carbonate qui est substitué sur le même cycle aromatique.

13. Polycarbonate selon l'une des revendications 11 ou 12, dans lequel chaque R¹ et chaque R² représentent indépendamment un groupe alkyle ou un groupe alcoxy, de préférence un groupe alkyle ou un groupe alcoxy ayant 1 à 6 atomes de carbone, plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy, le plus préférablement n-propyle ou méthoxy.

14. Polycarbonate selon l'une des revendications 11 à 13, dans lequel
- R³ signifie
o un groupe alkyle ayant 1 à 20 atomes de carbone, ce groupe alkyle étant optionnellement interrompu par au moins un hétéroatome, l'au moins un hétéroatome étant de préférence choisi parmi un atome d'oxygène ou un atome d'azote, ou
∘ un groupe phényle ou un groupe phényle substitué ayant au total 6 à 12 atomes de carbone,
- R⁴ signifie un groupe alkyle contenant 1 à 20 atomes de carbone, et/ou
- R⁵ signifie un atome d'hydrogène ou un groupe alkyle ayant 1 à 20 atomes de carbone, ce groupe alkyle étant optionnellement interrompu par un groupe ester.

15. Polycarbonate selon l'une des revendications 11 à 14, dans lequel
- le groupe de liaison dans chaque unité de répétition de formule (IIIa) et/ou dans chaque unité de répétition (IIIb) est indépendamment en position *méta* par rapport au groupe carbonate qui est substitué sur le même cycle aromatique, et/ou
- chacun des deux cycles aromatiques dans chaque unité de répétition de formule (IIIb) est indépendamment remplacé par le groupe de liaison, de sorte que chaque unité de répétition représente un isomère (E,E).
